(19) Europäisches Patentamt
European Patent Office
Office européen des brevets

(11) **EP 4 082 772 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **21171575.0**

(22) Anmeldetag: **30.04.2021**

(51) Internationale Patentklassifikation (IPC):
*B32B 15/18* (2006.01)   *B32B 3/14* (2006.01)
*B32B 5/02* (2006.01)   *B32B 9/00* (2006.01)
*B32B 9/04* (2006.01)   *B32B 15/01* (2006.01)
*B32B 15/14* (2006.01)   *B32B 15/20* (2006.01)
*C21D 8/12* (2006.01)   *B23K 20/02* (2006.01)
*B23K 20/04* (2006.01)   *B23K 20/227* (2006.01)
*H01F 3/04* (2006.01)

(52) Gemeinsame Patentklassifikation (CPC):
B32B 15/14; B23K 20/021; B23K 20/04;
B23K 20/2275; B32B 3/14; B32B 5/02;
B32B 9/005; B32B 9/007; B32B 9/041;
B32B 15/011; B32B 15/012; B32B 15/013;
B32B 15/015; B32B 15/18; B32B 15/20;   (Forts.)

(54) **ELEKTROBLECH, VERWENDUNG EINES ELEKTROBLECHS UND VERFAHREN ZUR HERSTELLUNG EINES ELEKTROBLECHS**

ELECTRIC SHEET, USE OF AN ELECTRIC SHEET AND METHOD FOR MANUFACTURING AN ELECTRIC SHEET

TÔLE ÉLECTRIQUE, UTILISATION D'UNE TÔLE ÉLECTRIQUE ET PROCÉDÉ DE FABRICATION D'UNE TÔLE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.11.2022 Patentblatt 2022/44**

(73) Patentinhaber: **Wickeder Westfalenstahl GmbH 58739 Wickede (Ruhr) (DE)**

(72) Erfinder:
• **Franken, Carina**
  **59823 Arnsberg-Oeventrop (DE)**
• **Dr. Platt, Jürgen**
  **40217 Düsseldorf (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
EP-A1- 3 127 647    WO-A1-2018/019602
WO-A1-2018/157946    DE-A1- 102018 102 422
US-A- 3 682 606

EP 4 082 772 B1

(52) Gemeinsame Patentklassifikation (CPC): (Forts.)
**C21D 8/12; C22C 38/02; H01F 3/04;** B32B 2250/05;
B32B 2250/42; B32B 2307/208; B32B 2457/00

**Beschreibung**

Die Erfindung betrifft Elektroband mit mindestens einer Funktionslage zumindest teilweise bestehend aus einem ferromagnetischen Werkstoff und mit mindestens einer Zusatzlage zumindest teilweise bestehend aus einem nicht magnetisierbaren Werkstoff. Die Erfindung betrifft auch die Verwendung eines Elektrobands und ein Verfahren zur Herstellung eines Elektrobands.

In elektrischen Systemen aller Art, beispielsweise für die Energieerzeugung in Generatoren, in der Energieübertragung und -verteilung in Transformatoren, in der Energienutzbarmachung in Motoren und anderen elektrischen Maschinen sowie in weiteren Anwendungen auf dem Gebiet der Elektrotechnik finden Elektrobleche bzw. Elektrobänder eine breite Verwendung.

Elektrobänder werden insbesondere als induktive Bauteile wie Magnetkerne elektrischer Maschinen oder in Übertragern verarbeitet. Unter einem Elektroband wird im Allgemeinen gewalztes Band aus einem magnetischen Werkstoff, beispielsweise aus Eisen-Silizium-Legierungen, verstanden. Nach einem mehrstufigen Herstellungsprozess, der beispielsweise Stahlerzeugung, Warmband- oder Kaltbandbehandlung sowie gegebenenfalls Wärmebehandlung und Bandbeschichtung sowie das Dressieren und Richten (Streckbiegerichten) der Bänder in den Adjustageanlagen beinhaltet, wird das Elektroband längs auf Verwendungsbreiten geteilt und durch Stanzen, Ätzen, Erodieren, Drahterodieren, Schneiden, Wasserstrahlschneiden oder Laserstrahlschneiden zu Elektroblechen, d.h. zu einzelnen Teilen von Elektrobändern, verarbeitet.

In weiteren Verarbeitungsschritten werden die Elektrobleche dann zu elektromagnetischen Komponenten, insbesondere zu Blechlamellen geschichtet, paketiert und fixiert. Diese elektromagnetischen Komponenten finden in elektrischen Systemen wie beispielsweise Generatoren, Transformatoren, Elektromotoren und anderen Magnetanwendungen als Magnetkerne in Form von Statoren, Rotoren, Transformatoren und anderen Magnetkernen in Relais, Schalter, Schaltschützen, Drosselspulen, Zündspulen, Stromzählern und steuerbaren Ablenkmagneten Anwendung.

Für den gezielten Einsatz des Elektroblechs in den relevanten Anwendungsfeldern sind zahlreiche Merkmale wie seine geometrischen, mechanisch-technologischen und anderen werkstofftechnischen Eigenschaften von hoher Bedeutung. Besonders wichtig jedoch für die Funktion des jeweiligen Bauteils ist sein Verhalten im elektromagnetischen Feld. So besteht Elektroblech in der Regel aus sogenannten weichmagnetischen Werkstoffen, d.h. Werkstoffen, die im äußeren Magnetfeld besonders einfach magnetisierbar sind und dadurch bei ihrem Einsatz in elektrischen Systemen die Energie optimal nutzen.

Die Magnetisierbarkeit eines Werkstoffs wird durch die materialabhängige absolute Permeabilität $\mu$ beschrieben. Zwischen der auf einen magnetischen Werkstoff wirkenden magnetischen Feldstärke $H$ und der im magnetischen Werkstoff durch $H$ erzeugten magnetischen Flussdichte gilt die Beziehung $B = \mu H$. Im leeren Raum gilt $B = \mu_0 H$, wobei $\mu_0$ die sogenannte magnetische Feldkonstante darstellt. Die dimensionslose Größe $\mu_r = \mu/\mu_0$, die man als Permeabilitätszahl oder relative Permeabilität bezeichnet, charakterisiert das magnetische Verhalten eines Werkstoffs. Als ferromagnetische Werkstoffe werden solche Werkstoffe bezeichnet, für die gilt $\mu_r \gg 1$, die also das von außen anliegende magnetische Feld im Inneren des Werkstoffs verstärken. Für den Bau elektrischer Maschinen sind aufgrund ihrer feldverstärkenden Wirkung hauptsächlich ferromagnetische Werkstoffe von Bedeutung.

Die Magnetisierbarkeit eines ferromagnetischen Werkstoffs wird durch den Verlauf der Kurve $B$ vs. $H$ beschrieben. Eine sich verändernde magnetische Feldstärke $H$ führt zu Bewegungen und Wachstumsvorgängen der magnetischen Domänen, also mikroskopischer Bereiche in einem ferromagnetischen Material, innerhalb derer die einzelnen atomaren oder molekularen Magnetpartikel gleich orientiert sind, im Inneren des ferromagnetischen Werkstoffs. Aufgrund dieser im Innern des Magnetmaterials ablaufenden Prozesse ergibt sich bei wachsender magnetischer Feldstärke $H$ ein Verlauf von $B$ vs. $H$, der sich von demjenigen bei abnehmender magnetischer Feldstärke unterscheidet. Dieser abweichende Verlauf wird als Hysterese bezeichnet.

Die Sorten von Elektrobändern werden durch den Verlauf der Kennlinie $B$ vs. $H$ bestimmt, wobei der aufsteigende Ast der Kennlinie, der Verlauf von $B$ bei wachsender magnetischer Feldstärke $H$, sich mit dem absteigenden Ast der Kennlinie, dem Verlauf von $B$ bei abnehmender magnetischer Feldstärke, an den Endpunkten zur Hystereseschleife zusammenschließt. Die Fläche der Hystereseschleife beschreibt den Energieaufwand zum Ummagnetisieren des magnetischen Werkstoffs.

Beim Abschalten des äußeren Magnetfeldes $H$ bleibt ein bestimmter Wert der magnetischen Polarisation $J$ des durch das magnetische Material bewirkten Anteils der Flussdichte $B$ erhalten. Dieser Wert wird als magnetische Remanenz $B_r$ bezeichnet. Die Breite der Hysterese ist durch die Koerzitivfeldstärke $H_c$ bestimmt, diejenige Feldstärke, die notwendig ist, um die Flussdichte auf null zu bringen. Bei der Ummagnetisierung durchläuft der Werkstoffzustand eine geschlossene Hystereseschleife, deren Flächeninhalt die pro Ummagnetisierungszyklus an die Umgebung abgegebene Energiemenge (Wärmemenge) pro Werkstoffvolumen darstellt.

Das magnetische Verhalten eines Bauteils in einem elektrischen System beeinflusst also maßgebend dessen Wirkungsgrad und somit den Energieverbrauch. Ein gesteigerter Wirkungsgrad und somit eine verbesserte Umwandlung von Energie kann durch eine anwendungsbezogene Optimierung insbesondere hinsichtlich der magnetischen Eigenschaften des Elektroblechs, und hier in besonderer Weise hinsichtlich des Ummagnetisierungsverlusts, erreicht werden. Als Ummagnetisierungsverlust oder Eisenverlust wird der Wärmeverlust im magnetischen Werkstoff bezeichnet, der bei magnetischen Wechselfeldern aufgrund der Veränderung der Magnetisierung entsteht. Die Veränderung der Magnetisierung kann dabei durch Wechselströme oder durch die Bewegung des Magnetfelds oder des Bauteils aus magnetischem Werkstoff erfolgen. So erfährt zum Beispiel auch der Rotor einer Gleichstrommaschine ein magnetisches Wechselfeld.

Ein Elektroband wird bisher im Dickenbereich von überwiegend 1mm bis 0,5 mm, teilweise bis hin zu 0,1 mm, hergestellt. Für Anwendungen im Elektromaschinenbau, in denen der magnetische Fluss auf keine bestimmte Richtung festgelegt ist, findet ein Elektroband mit möglichst isotropen Eigenschaften Anwendung. Für ein solches nichtkorn-orientiertes (NO-) Elektroband stellt ein polykristallines Gefüge mit Korngrößen zwischen 20 $\mu$m und 200 $\mu$m die ideale Struktur dar. Für Verwendungszwecke, bei denen es auf einen besonders niedrigen Ummagnetisierungsverlust ankommt und besonders hohe Ansprüche an Permeabilität oder Polarisation gestellt werden, wird üblicherweise ein Elektroband mit einheitlicher Orientierung der kristallografischen Textur, das man als kornorientiertes (KO-) Elektroband bezeichnet, eingesetzt.

Bei den Ummagnetisierungsverlusten unterscheidet man im Wesentlichen zwischen Wirbelstrom- und Hystereseverlusten. Hystereseverluste bezeichnen die Verluste, die die aufgewendete Arbeit beschreiben, die notwendig ist, um die magnetischen Domänen bei der Ummagnetisierung eines magnetischen Werkstoffs zu verschieben. Dieser Verlust ist proportional zur Fläche der durchlaufenen Hystereseschleife des $B$ vs. $H$ - Verlaufs und wird beschrieben durch $P_{hyst} = (k_H A H_C B_{max} f)/\rho$, wobei $k_H$ den von der Geometrie des Werkstoffs und von den Einflüssen durch die Beanspruchung bei der Verarbeitung (z.B. Stanzen, Biegen, Ziehen) abhängigen Formfaktor beschreibt. Des Weiteren bezeichnen $H_c$ die Koerzitivfeldstärke, $B_{max}$ die Amplitude der magnetischen Induktion im Werkstoff, $f$ die Ummagnetisierungsfrequenz und $\rho$ die Materialdichte des Werkstoffs.

Wird ein elektrisch leitfähiger Körper einem sich ändernden Magnetfeld ausgesetzt, wird eine elektrische Spannung induziert, die wiederum einen elektrischen Strom hervorruft. Die durch diesen Strom erzeugten Stromwärmeverluste werden als Wirbelstromverluste bezeichnet und gemäß $P_{wirbel} = k_{wirbel}(B_{max} f \pi)^2$ berechnet, mit der materialabhängigen Größe $k_{wirbel} = \kappa d^2/(6\rho)$, auch genannt Wirbelstromverlustfaktor, wobei $\kappa$ den spezifischen Leitwert (elektrische Leitfähigkeit) des Werkstoffs, $d$ die Dicke des Elektroblechs und $\rho$ die Materialdichte des Werkstoffs des Elektrobleches darstellen.

Die magnetischen Eigenschaften und insbesondere die Ummagnetisierungsverluste von Elektroblechen werden also wesentlich von materialspezifischen Parametern sowie der Dicke des Elektroblechs bestimmt. Eisenkerne aus Vollmaterial sind aufgrund von hohen Wirbelstromverlusten kaum nutzbar, zusätzlich wird der Kern durch Wirbelströme mit zunehmender Frequenz heiß. Um dies zu vermeiden und um den Ummagnetisierungsverlust zu senken, werden Eisenkerne für elektrische Maschinen als lamellierte, d.h. aufeinandergeschichtete und isolierte Elektrobleche in Paketen oder als gewickelte Schnittbandkerne ausgeführt.

Zur wirksamen Unterdrückung der Ausbildung von Wirbelströmen werden die Lamellen aus Elektroblech mit einem isolierten Überzug, beispielsweise aus Lack, versehen. Die Schichtdicken solcher Isolierschichten liegen im Bereich weniger $\mu$m, typischerweise sind die einzelnen Bleche von jeder Seite mit einer 1-2 $\mu$m dicken Schicht Isolierlack beschichtet und weisen eine gewisse Rauheit auf. Werden die Elektrobleche nun gestapelt und verbunden, setzt sich der Stapel vor allem aus Elektroblech, aber auch Lack und Lufteinschlüssen zusammen. Das gesamte Volumen des Stapels, auch genannt Paket, ist also nicht vollständig durch das Material des magnetischen Werkstoffs gefüllt.

Auch mit kleiner werdenden Dicken des Elektroblechs verringern sich die auftretenden Wirbelstromverluste. Allerdings stellt die Herstellung dünner Elektrobänder erhöhte Anforderungen an den Herstellungsprozess. Zusätzlich ist zu beachten, dass sich das Verhältnis zwischen dem magnetisierbaren Material des Elektroblechs und dem nicht-magnetisierbaren Material der Beschichtung bei sehr kleinen Dicken des Elektroblechs ungünstig entwickelt: je mehr Lack auf der Elektroblechoberfläche im Verhältnis zu dessen Dicke ist, desto weniger Eisen ist in einem Blechpaket bestimmter Höhe enthalten. Dieses Verhältnis ist umso schlechter, je dünner das Elektroband ist, das Verhältnis Blech zu Lackdicke wird immer geringer und ab einem bestimmten Punkt nimmt der positive Effekt der Verwendung besonders geringer Dicken des Elektroblechs ab.

Daher wird das Elektroband, bedingt durch die Anforderungen des Marktes, in verschiedenen Dicken gefertigt und anschließend zu Elektroblechen weiter verarbeitet. Durch das Schichten der Elektroblech-Lamellen zu Kernen werden insbesondere bei großen Kernhöhen sehr enge Toleranzen bezüglich der Blech- bzw. Banddicke erforderlich. Nichtkornorientiertes Elektroband wird vorrangig in den Dicken 0,50 mm und 0,65 mm hergestellt, aber auch 0,35 mm und 1,00 mm sind gebräuchlich. Bei kornorientiertem Elektroband sind die Banddicken 0,35 mm, 0,30 mm, 0,27 mm und 0,23 mm gebräuchlich. Darüber hinaus sind Elektrobänder mit einer Nenndicke von 0,1 mm bekannt.

Eine weitere wichtige Methode, den Ummagnetisierungsverlust zu senken, besteht in der Verwendung angepasster Legierungen. Beispielsweise kann der Ummagnetisierungsverlust durch Zulegieren von Silizium gesenkt werden, da mit steigendem Siliziumgehalt der spezifische elektrische Widerstand des magnetischen Werkstoffs erhöht und somit die Leitfähigkeit verringert wird. Da ein steigender Siliziumgehalt jedoch der Kaltumformbarkeit des Elektrobands schadet und handelsübliche Elektrobänder zumeist kaltgewalzt werden, ergeben sich hieraus erhöhte Anforderungen an den Herstellungs- und Verarbeitungsprozess. Daher wird in der Regel ein Siliziumgehalt mit einem Massenanteil von 3,5 % nicht überschritten.

Weitere geeignete Maßnahmen zur Verbesserung der Materialeigenschaften von Elektroblechen, neben der Verringerung der Blechdicken und der Verwendung angepasster Legierungen, ist die Einstellung günstiger Mikrostruktureigenschaften insbesondere in Bezug auf die Korngröße und die Textur. Jedoch hat diese Einstellung wiederum einen zumeist negativen Einfluss auf die mechanischen Eigenschaften und somit die Verarbeitbarkeit des Elektroblechs.

Aus der WO 2018/157946 A1 ist ein Verbundwerkstoff mit zwei kornorientierten Elektrobandschichten mit Schichtdicken von 50 bis 1500 μm bekannt, der mittels Beschichten einer Elektrobandschicht mit einem polymeren Mittel und anschließendem Laminieren von zwei Elektrobandschichten hergestellt wird.

Die WO 2018/019602 A1 beschreibt ein Stahlband zur Herstellung eines nichtkornorientierten Elektroblechs mit einer Isolationsschicht, welches eine Enddicke von minimal 100 μm aufweist.

Gemäß der US 3,682,606 A wird ein Aluminium-Stahl-Verbundwerkstoff für den Bau von Leichtbaukonstruktionen von Fahrzeugen oder deren Panzerung beschrieben.

Die EP 3 127 647 A1 beschreibt die Herstellung eines Metall-Laminatmaterials unterschiedlicher Materialien durch Verbinden zweier Bleche M1 und M2 durch Walzdruckverklebung

Die DE 10 2018 102422 beschreibt die Verwendung eines Verbundwerkstoffs zur Abschirmung gegenüber elektrischen und magnetischen Feldern.

Daher liegt der vorliegenden Erfindung das technische Problem zugrunde, ein Elektroband der eingangs genannten Art sowie ein Verfahren zur Herstellung eines Elektrobands zur Verfügung zu stellen, das die für den Stand der Technik beschriebenen Nachteile verbessert und insbesondere die Effizienz der Energieumwandlung bei einer Anwendung als induktives Bauteil erhöht.

Das zuvor aufgeführte technische Problem wird erfindungsgemäß nach einer ersten Lehre bei einem Elektroband mit mindestens einer Funktionslage zumindest teilweise, vorzugsweise vollständig, bestehend aus einem ferromagnetischen Werkstoff und mit mindestens einer Zusatzlage zumindest teilweise, vorzugsweise vollständig, bestehend aus einem nicht magnetisierbaren Werkstoff, und wobei mindestens eine Funktionslage eine Dicke im Bereich von 2 bis 100 μm, bevorzugt von 2 bis 60 μm, aufweist, dadurch gelöst, dass die mindestens eine Zusatzlage durch eine Adhäsionsbindung mit atomarer Diffusion miteinander verbunden sind.

Unter einem Elektroband wird nachfolgend beispielsweise ein mindestens zweischichtiges Elektroband, oder auch ein aus diesem Elektroband zugeschnittenes mindestens zweischichtiges Elektroblech verstanden. Ein elektroband kann also auch ein Elektroblech darstellen. Aufgrund der ferromagnetischen Eigenschaften finden Elektrobänder bzw. Elektrobleche der angegebenen Art als induktive Bauteile in elektrischen Maschinen oder in Transformatoren bzw. Übertragern Anwendung.

Grundsätzlich ergeben sich die nachfolgend beschriebenen Eigenschaften des Elektrobands bereits bei der erwähnten geringen Anzahl an Lagen. Bevorzugt sind dabei beispielsweise zwei Funktionslagen, zwischen denen eine Zusatzschicht angeordnet ist. Des Weiteren können drei bis zehn Funktionslagen mit jeweils dazwischen angeordneten neun Zusatzlagen vorgesehen sein. Wie weiter unten beschrieben wird, können auch jeweils zwei Funktionslagen aneinander grenzen, die dann von weiteren Funktionslagen durch Zusatzlagen getrennt sind.

Bevorzugt ist weiterhin ein Elektroband aus einer Mehrzahl von Funktionslagen und Zusatzlagen, die, vorzugsweise abwechselnd, aneinander angrenzend angeordnet sind. Dabei können typischer Weise 10 bis 100 Funktionslagen mit entsprechend vielen Zusatzlagen in einem Stapel vorhanden sein. Die Anzahl der Lagen ist aber grundsätzlich nicht beschränkt, sofern eine Herstellung möglich ist.

Im Rahmen der Erfindung wurde erkannt, dass mittels des Verbunds der mindestens einen Funktionslage und der mindestens einen Zusatzlage durch Adhäsionsbindung mit atomarer Diffusion ein Elektroband mit verbesserten Materialeigenschaften, insbesondere mit verbesserten magnetischen Eigenschaften, bereitgestellt werden kann. Durch einen solchen Verbund können innere Spannungen am Übergang der beteiligten Bindungspartner und somit im Innern des Elektrobands bzw. Elektroblechs reduziert werden.

Vorliegend wird unter einer Verbindung durch Adhäsionsbindung mit atomarer Diffusion ein Verbund zwischen zwei Bindungspartnern verstanden, bei dem sich durch atomare Diffusion der Materialien der Bindungspartner eine Übergangsschicht als Bindungszone ausbildet, über die eine kontinuierliche Anpassung der Materialeigenschaften stattfindet. Die Adhäsionsbindung mit atomarer Diffusion entsteht also durch die Ausbildung der Übergangsschicht zwischen den Lagen.

In der Übergangsschicht sind die Atome der Bindungspartner graduell vermischt, die Bildung eines Verbunds erfolgt durch Platzwechselvorgänge (Diffusion) in der Übergangsschicht, auch genannt Bindungszone. Diese Übergangsschicht bewirkt die Verringerung innerer Spannungen. Die Ausdehnung der Übergangszone ist dabei abhängig von den jeweilig verwendeten Bindungspartnern, insbesondere den Diffusionseigenschaften der beteiligten Materialien.

Zur Charakterisierung der Adhäsionsbindung mit atomarer Diffusion, also der Bindungszone der Adhäsionsbindung in der Übergangsschicht, und der Eigenschaften können Analysen mittels verschiedener Methoden angewendet werden. Zu diesen Methoden gehören optische Lichtmikroskopie, Transmissionselektronenmikroskopie (TEM), Rasterelektronenmikroskopie (REM), energiedispersive Röntgenspektroskopie (EDS), Sekundärionenmassenspektrometrie (SIMS) und Analysen von Mikrohärteverläufen.

Ein solcher Verbund kann beispielsweise als Plattierverbund bezeichnet werden. Bevorzugt sind die beiden Bindungspartner metallische Werkstoffe und der Plattierverbund stellt eine metallische Verbindung der beiden Bindungspartner oder Plattierpartner dar. Allerdings sind auch Verbunde zwischen metallischen Werkstoffen und nicht-metallischen Werkstoffen, beispielsweise kohlenstoffhaltigen Werkstoffen, oder zwischen nicht-metallischen Bindungspartnern, beispielsweise Kunststoffen, möglich. Vorwiegend sind die Bindungspartner des Verbunds in Lagen flächig aneinander angrenzend angeordnet. Die Verbindung der Bindungspartner im Plattierverbund kann mittels Plattieren erfolgen. Dazu kann das Plattieren durch Kaltwalzplattieren oder Warmplattieren durchgeführt werden.

Die Verbindung der Bindungspartner kann alternativ auch durch Schweißen von Metallpaketen, ins- besondere Diffusionsschweißen oder Elektroschwei- ßen, bzw. durch ein Paketieren und partielles Verschweißen hergestellt sein. Des Weiteren ist eine Herstellung mittels Sintern oder mittels Hot Isostatic Pressing (HIP) möglich.

Die mindestens eine Funktionslage besteht er- findungsgemäß zumindest teilweise, vorzugsweise voll- ständig, aus einem ferromagnetischen Werkstoff, insbesondere aus Eisen, Nickel, Kobalt, weiteren ferromagnetischen Werkstoffen, deren Legierungen oder einer Plattierung aus zwei oder mehreren dieser Werkstoffe. Selbst bei grundsätzlich paramagnetischen Materialien wie beispielsweise Kupfer ist es bekannt, dass durch eine entsprechende Bearbeitung des Metalls ferromagnetische Eigenschaften hervorgerufen werden können. In diesem Fall kommt ein solches Material ebenfalls für die Herstellung der Funktionslage in Frage.

Angestrebt und insoweit bevorzugt ist die Ausbildung der Funktionslage als eine durchgängige Lage, um die Eigenschaften der Funktionslage bestmöglich zu erreichen. Die Funktionslage kann aber auch als nicht durchgängige Lage ausgebildet sein, da bei der Herstellung die Durchgängigkeit der Lage nicht vollständig garantiert werden kann. Andererseits kann, abhängig von den verwendeten Werkstoffen, auch die Herstellung einer als nicht durchgängige Lage ausgebildeten Funktionslage angestrebt werden, so dass der Werkstoff der Zusatzlage zumindest teilweise den Werkstoff der Funktionslage durchsetzt. Auf diese Weise können weitere Eigenschaften des Verbunds wie Leitfähigkeit oder Beständigkeit verbessert werden. Auch kann der Werkstoff der Funktionslage weitere, nicht ferromagnetische Bestandteile und Einschlüsse aufweisen.

Ebenso wird unter der mindestens einen Zusatzlage bestehend zumindest teilweise, vorzugsweise vollständig, aus einem nicht magnetisierbaren Werkstoff eine Lage verstanden, die als durchgängige Lage oder als nicht durchgängige Lage ausgebildet ist. Hier gilt ebenfalls, dass eine durchgängige Lage angestrebt und insoweit bevorzugt ist, um die Eigenschaften der Zusatzlage bestmöglich zu erreichen. Auch kann die mindestens eine Zusatzlage weitere Werkstoffe, neben einem nicht magnetisierbaren Werkstoff, enthalten. Insbesondere können sowohl in der mindestens einen Funktionslage als auch in der mindestens einen Zusatzlage offene oder geschlossene Poren, beispielsweise Luftporen, vorhanden sein.

Die mindestens eine Zusatzlage kann selbst aus einer Schicht oder aus mindestens zwei Schichten bestehen. Bevorzugt ist die mindestens eine Zusatzlage ein plattierter Werkstoff oder ein Mehrschichtverbundwerkstoff. Besonders bevorzugt weist die mindestens eine Zusatzlage eine Glimmerlage oder eine Graphenschicht auf einer Metallschicht aus Kupfer oder Aluminium auf. Als Material der mindestens einen Zusatzlage kann auch ein Faserverbundwerkstoff, ein keramisches Material oder ein Schichtsilikat (Glimmer) eingesetzt werden, wodurch insbesondere eine elektrische Isolation in den Verbund des Elektrobands bzw. Elektroblechs eingebracht werden kann.

Insbesondere kann auch das Vorsehen einer solchen mindestens einen Zusatzlage in vorteilhafter Weise die Materialeigenschaften wie die magnetischen Eigenschaften des Elektrobands beeinflussen, wenn die Zusatzlage als nicht durchgängige Zusatzlage ausgebildet ist. Durch eine nicht durchgängige Zusatzlage wird ein Kontakt der zu beiden Seiten der mindestens einen Zusatzlage angeordneten Funktionslagen ermöglicht.

Die mindestens eine Zusatzlage ist alternativ bevorzugt als durchgängige Lage ausgebildet, so dass ein Kontakt der zu beiden Seiten der mindestens einen Zusatzlage angeordneten Funktionslagen verhindert wird. Sowohl durch das Vorsehen einer durchgängig ausgebildeten mindestens einen Zusatzlage als auch durch das Vorsehen einer nicht durchgängig ausgebildeten mindestens einen Zusatzlage können die Materialeigenschaften und insbesondere die magnetischen Eigenschaften eines Elektrobands besonders gut beeinflusst werden. Insbesondere können die Ummagnetisierungsverluste des Elektrobands verringert werden.

Der Werkstoff mindestens einer Funktionslage kann eine Eisen-Silizium-Legierung aufweisen. Solche Legierungen haben sich als vorteilhafte Werkstoffe, insbesondere im Hinblick auf Ummagnetisierungsverluste, für Elektrobänder und insbesondere für Elektrobleche erwiesen. Die Funktionslage kann ein kornorientiertes Gefüge oder ein nicht kornorientiertes Gefüge aufweisen. Darüber hinaus kann der Werkstoff mindestens einer Funktionslage auch weitere Eisen (Fe)-Legierungen sowie Legierungen aus Kobalt (Co), Aluminium (Al) und/oder Nickel (Ni) aufweisen.

In bevorzugter Weise ist bei der Herstellung der Funktionslagen angestrebt, möglichst viele große Körner zu generieren, vorzugsweise bis hin zu Korngrößen in der Größe der Lagenstärke. Zudem ist je nach dem Material der Zusatzlage das Eindiffundieren von Elementen und deren Implementieren in das Kristallgitter des Werkstoffs der Funktionslage möglich.

Mittels des zuvor beschriebenen Verbunds kann insbesondere ein Elektroband aufweisend Funktionslagen und/oder Zusatzlagen aus verschiedenen Werkstoffen, bevorzugt aufweisend Funktionslagen aus verschiedenen ferromagnetischen und Zusatzlagen aus verschiedenen nicht magnetisierbaren Werkstoffen, bereitgestellt werden. Die verschiedenen Werkstoffe können insbesondere sich unterscheidende Materialeigenschaften, beispielsweise unterschiedliche Eigenschaften betreffend die elektrische Leitfähigkeit oder die Wärmeleitfähigkeit sowie die Materialdichte, aufweisen. So ist eine gezielte Auswahl der Materialeigenschaften möglich, die bei vorteilhafter Wahl und Kombination insbesondere die magnetischen Eigenschaften des Elektrobands verbessern kann.

Im Rahmen der Erfindung wurde insbesondere erkannt, dass durch den erfindungsgemäßen Verbund mittels Adhäsionsbindung mit atomarer Diffusion die Ummagnetisierungsverluste, insbesondere die Hysterese- und Wirbelstromverluste, gesenkt werden können. Bevorzugt werden durch das Einbringen von Zusatzlagen die für die Wirbelstromverluste, gegeben durch

$$P_{wirbel} = \left(\frac{\kappa d^2}{6\rho}\right)\left(B_{max}f\pi\right)^2$$ , und für die Hystereseverluste, gegeben durch $P_{hyst} = (k_H A H_C B_{max} f)/\rho$, eines Elektrobands bedeutsamen materialspezifischen Kenngrößen, insbesondere $\rho$ und $\kappa$, so beeinflusst, dass die Ummagnetisierungsverluste insgesamt verringert werden. Eine Verringerung der Ummagnetisierungsverluste, insbesondere sowohl der Hysterese- als auch der Wirbelstromverluste, konnte bei Frequenzen im Bereich von 1 kHz bis 10 kHz, beobachtet werden. Der mögliche Frequenzbereich ist dabei von dem spezifischen Material der Funktionslage und/oder der Zusatzlage abhängig.

Eine Verringerung der Hystereseverluste konnte insbesondere durch eine Verringerung der Fläche der durchlaufenen Hystereseschleife des *B* vs. *H* - Verlaufs des erfindungsgemäßen Verbunds mit mindestens einer Funktionslage und mit mindestens einer Zusatzlage im Vergleich zu Messungen eines vergleichbar dicken Elektroblechs ohne Zusatzlagen beobachtet werden. Darüber hinaus kann mittels des Verbunds durch atomare Adhäsionsbindung mit atomarer Diffusion die Koerzitivfeldstärke beeinflusst werden. Betreffend die Verringerung der Wirbelstromverluste konnte eine Verringerung des Wirbelstromverlustfaktors $k_{wirbel} = kd^2/(6\rho)$ beobachtet werden.

Darüber hinaus können durch das Vorsehen von mindestens einer Zusatzlage aus einem nicht magnetisierbaren Material neben den magnetischen Eigenschaften weitere Materialeigenschaften des Elektrobands gezielt beeinflusst werden. Beispielsweise ist es möglich, durch die Verwendung mindestens einer Zusatzlage mit einer im Vergleich zur Materialdichte $\rho$ des Werkstoffs der Funktionslagen geringeren Materialdichte $\rho$ eine Gewichtsreduktion des Elektrobands zu erreichen. Eine Gewichtsreduktion des Elektrobands führt in vorteilhafter Weise zu einer weiteren Verbesserung der Energieeffizienz eines Elektrobands, insbesondere bei der Verwendung als Elektroblech in sich bewegenden Bauteilen.

Zudem kann die Wärmeleitung des Elektrobands gezielt durch das Vorsehen von mindestens einer Zusatzlage beeinflusst werden. Beispielsweise kann der für die mindestens eine Zusatzlage verwendete Werkstoff eine höhere Wärmeleitfähigkeit im Vergleich zu dem für die mindestens eine Funktionslage verwendeten Werkstoff aufweisen. Auf diese Weise kann die Wärmeleitfähigkeit des Elektrobands verbessert werden, was einen Betrieb bei im Vergleich zu einem Elektroblech ohne mindestens eine Zusatzlage höheren Wärmebelastungen ermöglicht.

Weiterhin erlaubt der erfindungsgemäße Verbund mittels Adhäsionsbindung mit atomarer Diffusion eine Verringerung der Dicke der magnetisch wirksamen Funktionslagen des Elektrobands. Durch die quadratische Abhängigkeit des Wirbelstromverlustfaktors von der Dicke *d* der einzelnen Funktionslagen des Elektrobands ist dies besonders vorteilhaft für das Erreichen geringerer Ummagnetisierungsverluste.

Das oben aufgeführte technische Problem wird erfindungsgemäß nach einer zweiten Lehre bei einem Elektroband mit mindestens einer Funktionslage zumindest teilweise, vorzugsweise vollständig, bestehend aus einem ferromagnetischen Werkstoff und mit mindestens einer Zusatzlage zumindest teilweise, vorzugsweise vollständig, bestehend aus einem nicht magnetisierbaren Werkstoff, wobei die mindestens eine Zusatzlage und die mindestens eine Funktionslage miteinander verbunden sind, dadurch gelöst, dass die mindestens eine Funktionslage eine Dicke im Bereich von 2 bis 100 $\mu$m, bevorzugt von 2 bis 60 $\mu$m, aufweist.

Grundsätzlich ergeben sich auch hier die nachfolgend beschriebenen Eigenschaften des Elektrobands bereits bei der erwähnten geringen Anzahl an Lagen. Bevorzugt ist jedoch ein Elektroband aus einer Mehrzahl von Funktionslagen und Zusatzlagen, die, vorzugsweise abwechselnd, angrenzend zueinander angeordnet sind. Dabei können typischer Weise 5 bis 100 Funktionslagen mit entsprechend vielen Zusatzlagen in einem Stapel vorhanden sein. Die Anzahl der Lagen ist aber grundsätzlich nicht beschränkt, sofern eine Herstellung möglich ist.

Es wurde erkannt, dass mittels solch eines Elektrobands mit mindestens einer Funktionslage mit einer Dicke im Bereich von 2 bis 100 $\mu$m, bevorzugt von 2 bis 60 $\mu$m, die Ummagnetisierungsverluste deutlich verringert werden können. Insbesondere wird durch die genannten Dicken der Funktionslagen eine deutliche Verringerung der Wirbelstromverluste erreicht: der Wir-

belstromverlustfaktor $k_{\text{wirbel}} = \kappa {*} d^2/(6{*}\rho)$ ist quadratisch abhängig von der Dicke der einzelnen Funktionslage $d$. Durch das Vorsehen von mindestens einer Funktionslage teilweise, vorzugsweise vollständig, bestehend aus einem magnetisierbaren Werkstoff mit den genannten Dicken und mindestens einer Zusatzlage aus nicht magnetisierbarem Material wird die Dicke der jeweiligen zu den Wirbelstromverlusten beitragenden Funktionslagen des Elektrobands verringert. Die Gesamtdicke der Funktionslagen kann dann jedoch im Wesentlichen herkömmlichen Elektroblechen entsprechen. Somit können die beschriebenen Elektrobleche die gleiche magnetische Wirkung als induktives Bauteil wie herkömmliche Elektrobänder aufweisen, jedoch geringere Energieverluste aufweisen. Denn der Wirbelstromverlustfaktor und somit der Wirbelstromverlust können deutlich gesenkt werden. Dies ermöglicht eine besonders effiziente Energieumwandlung.

Darüber hinaus wurde erkannt, dass durch das Vorsehen von mindestens einer Funktionslage mit den genannten Dicken insbesondere auch die Koerzitivfeldstärken beeinflusst und Hystereseverluste verringert werden können. Insbesondere ermöglicht ein Vorsehen von mindestens einer Funktionslagen mit den genannten geringen Dicken bei festgelegter Gesamtdicke des Elektrobands eine Trennung der magnetisch wirksamen Lagen, so dass die Ausbreitung von Wirbelströmen räumlich begrenzt werden kann.

Bevorzugt sind bei dem oben beschriebenen Elektroband gemäß der zweiten erfindungsgemäßen Lehre die mindestens eine Zusatzlage und die mindestens eine Funktionslage durch eine Adhäsionsbindung mit atomarer Diffusion miteinander verbunden. Auf diese Weise kann ein Elektroband zur Verfügung gestellt werden, das die Vorteile vereint, die auf den Verbund durch eine Adhäsionsbindung mit atomarer Diffusion und auf die genannten geringen Dicken der mindestens einen Funktionslage zurückzuführen sind. Dies führt in vorteilhafter Weise zu einer besonders deutlichen Verringerung der Ummagnetisierungsverluste. Durch den beschriebenen Verbund können insbesondere auch verbesserte Materialeigenschaften neben den magnetischen Eigenschaften erzielt werden. Beispielsweise werden eine Verringerung innerer Spannungen und eine erhöhte Haftfestigkeit zwischen den einzelnen Lagen durch die Adhäsionsbindung erreicht.

Bei einer weiteren Ausführungsform des Elektrobands weist die mindestens eine Zusatzlage eine Dicke in einem Bereich von 2 μm bis 100 μm, bevorzugt in einem Bereich von 2 bis 60 μm auf. Durch das Einbringen von mindestens einer, bevorzugt mehrerer, Zusatzlagen solch einer geringen Dicke können die Materialeigenschaften des Verbundmaterials gezielt beeinflusst werden. Insbesondere erlaubt das Vorsehen der beschriebenen mindestens einen Zusatzlage oder mehrerer Zusatzlagen die Diffusion des Materials der Funktionslagen durch eine Zusatzlage hindurch. Weist die Zusatzlage beispielsweise ein elektrisch isolierendes Material auf, kann bei Diffusion des Materials der Funktionslagen durch eine Zusatzlage hindurch die elektrische Isolation der Funktionslagen voneinander aufgehoben werden. Auch kann die Wärmeleitung zwischen den Schichten durch diese Diffusion verbessert werden.

Angestrebt ist bei der Ausgestaltung der Funktionslagen und Zusatzlagen, dass diese als durchgängige Lagen bilden. Aber auch mittels mindestens einer nicht als durchgängige Lage ausgebildeten Zusatzlage, oder mehrerer solcher Zusatzlagen, können die magnetischen Eigenschaften verbessert und insbesondere die Ummagnetisierungsverluste, vor allem die Hysterese- und Wirbelstromverluste, gegenüber herkömmlichen Elektrobändern gesenkt werden. Weiterhin kann gegebenenfalls gezielt erreicht werden, dass die Funktionslagen untereinander in Kontakt, beispielsweise elektrischem Kontakt, stehen. Dies kann die elektromagnetischen Eigenschaften des Elektrobands, insbesondere bei spezifischen Geometrien der daraus hergestellten Bauteile, weiter positiv beeinflussen, insbesondere bei Anwendungen des Elektrobands, bei dem ein Verbundmaterial mit variablen Dicken und guter elektrischer Leitfähigkeit gefordert ist.

Gemäß einer weiteren Ausführungsform des Elektrobands besteht die mindestens eine Zusatzlage zumindest teilweise, vorzugsweise vollständig, aus einem metallischen Werkstoff. Durch das Verwenden eines metallischen, aber nicht magnetisierbaren Werkstoffs für das Material der mindestens einen Zusatzlage lässt sich eine besonders haftfeste metallische Adhäsionsbindung mit atomarer Diffusion erreichen. Dies führt zu einer erhöhten Beständigkeit des Elektrobands und somit zu einer längeren Lebensdauer desselben. Insgesamt wird so ein besonders ressourcenschonendes Elektroband angegeben. Da Metalle vorwiegend eine gute elektrische Leitfähigkeit sowie eine gute Wärmeleitfähigkeit aufweisen, können so, abhängig von den verwendeten metallischen Werkstoffen, auch die elektrische Leitfähigkeit und/oder die Wärmeleitfähigkeit des Elektrobands erhöht werden.

Bei einer weiteren Ausführungsform weist die mindestens eine Zusatzlage Kupfer (Cu), bevorzugt einen Kupfergehalt mit einem Massenanteil im Bereich von 1 bis 15 %, auf. Kupfer zeichnet sich durch seine hohe Wärmeleitfähigkeit aus, so dass auf diese Weise ein Elektroband mit verbesserter Wärmeleitfähigkeit angegeben wird.

Bei einer weiteren Ausführungsform des Elektrobands weist die mindestens eine Zusatzlage Aluminium (Al), bevorzugt einen Aluminiumgehalt mit einem Massenanteil im Bereich von 1 bis 15 %, insbesondere im Bereich von 3 bis 15%, auf. Auch Aluminium weist eine hohe Wärmeleitfähigkeit auf, so dass auf diese Weise ebenfalls ein Elektroband mit verbesserter Wärmeleitfähigkeit angegeben wird.

Ein Elektroband mit verbesserter Wärmeleitfähigkeit erlaubt ein verbessertes Abführen von Wärme, beispielsweise der durch die induktionsbasierten Wirbelströme erzeugten Wärme. Insgesamt kann so die aufgrund der Ummagnetisierungsverluste erzeugte Wärme des Elektrobands effizienter abgeführt werden. Auch kann Wärme innerhalb des elektrischen Bauteils, in dem Elektroband als Elektroblech eingesetzt ist, besser verteilt werden. Da Wärmeverluste mit steigender Drehzahl einer elektrischen Maschine und steigender Frequenz zunehmen, kann das Elektroband bzw. das daraus hergesetllte Elektroblech besonders vorteilhaft für Anwendungen, die eine hohe Frequenz und Drehzahl erfordern, eingesetzt werden.

Darüber hinaus ist das Vorsehen mindestens einer Zusatzlage mit einem Anteil an Aluminium vorteilhaft, da Aluminium im Vergleich zu anderen metallischen Materialien eine geringe Materialdichte aufweist. Somit hat das Vorsehen mindestens einer Zusatzlage mit einem Anteil an Aluminium eine Gewichtsreduktion des Elektrobands zur Folge. Eine Gewichtsreduktion ermöglicht eine größere Flexibilität der Anwendung des Elektrobands bzw. des Elektroblechs in elektrischen und elektronischen Bauteilen. Dies ist besonders vorteilhaft für die Verwendung von Elektrobändern bei sich bewegenden elektrischen oder elektronischen Elementen, da so Energie zur Bewegung dieser Elemente eingespart werden kann.

Bei einer weiteren Ausführungsform des Elektrobands weist die mindestens eine Zusatzlage Zirkonium (Zr) auf. Zirkonium zeichnet sich neben einer hohen Wärmeleitfähigkeit auch durch gute Korrosionsbeständigkeit aus. So können auf diese Weise sowohl die Langlebigkeit als auch die Wärmeleitfähigkeit des Elektrobands gesteigert werden. Weiter lässt sich dadurch, dass Zirkonium relativ weich und biegsam ist, das Verarbeiten der mindestens einen Zusatzlagen und/oder des Elektrobands, beispielsweise durch Walzen, Schmieden und Hämmern, erleichtern und somit effizienter gestalten.

Des Weiteren kann die mindestens eine Zusatzlage eine spezifische Wärmeleitfähigkeit zumindest gleichgroß wie, bevorzugt größer als, die spezifische Wärmeleitfähigkeit der mindestens einen Funktionslage aufweisen. Auf diese Weise wird insgesamt eine verbesserte Wärmeleitfähigkeit des Elektrobands erreicht und es ergeben sich die zuvor beschriebenen Vorteile.

Bei einer weiteren Ausführungsform besteht die mindestens eine Zusatzlage zumindest teilweise, vorzugsweise vollständig, aus einer austenitischen Legierung oder einem austenitischen Stahl, kurz Austenit genannt. Durch das Vorsehen mindestens einer Zusatzlage aus Austenit kann eine Verringerung der Ummagnetisierungsverluste, insbesondere der Hysterese- und Wirbelstromverluste, erreicht werden. Durch das Vorsehen von mindestens einer Zusatzlage dieses paramagnetischen Materials können zwei Funktionslagen eines Elektrobands, zwischen denen die Zusatzlage angeordnet ist, magnetisch voneinander getrennt, d.h. isoliert, werden. Dies führt insbesondere zu einer Verringerung der durch elektromagnetische Induktion hervorgerufenen Wirbelströme.

Darüber hinaus ist das Vorsehen von mindestens einer Zusatzlage aus Austenit vorteilhaft, da Austenit vorteilhafte mechanische Eigenschaften, beispielsweise eine hohe Verformbarkeit aufweist und sich so gut verarbeiten lässt. Dies vereinfacht die Herstellung eines Elektrobands und bietet eine erhöhte Flexibilität für Anwendungen. Austenitische Stähle bzw. Legierungen weisen auch eine hohe Beständigkeit gegen aggressive Umgebungsbedingungen, insbesondere gegenüber Korrosionsangriffen, auf. Somit kann die Beständigkeit eines Elektrobands erhöht und die Einsatzdauer verlängert werden.

Insbesondere hat es sich als vorteilhaft erwiesen, mindestens eine Zusatzlage aus Austenit vorzusehen, die einer Wärmebehandlung bei einer Temperatur im Bereich von 650 bis 1000 °C, vorzugsweise von 670 °C oder von 1000 °C unterzogen wurde.

Bei einer weiteren Ausführungsform besteht die mindestens eine Zusatzlage zumindest teilweise, vorzugsweise vollständig, aus Damaszenerstahl, auch genannt Damaststahl. Die Verwendung von Damaststahl erlaubt die Kombination unterschiedlicher Stähle mit unterschiedlichen Vorteilen in einem Werkstoff. Beispielsweise kann die mindestens eine Zusatzlage so aus einem Werkstoff bestehen, der sowohl flexibel als auch schnitthaltig ist. Dies ist voreilhaft für die Verarbeitung und auch spätere Anwendung des Elektrobands.

Des Weiteren kann die mindestens eine Zusatzlage zumindest teilweise, vorzugsweise vollständig, aus einem nicht-metallischen Werkstoff, bevorzugt einem Kohlenstoff (C)-enthaltenden Werkstoff, besonders bevorzugt Graphen oder Graphit bestehen. Nichtmetallische Werkstoffe weisen im Allgemeinen eine sehr niedrige bis verschwindende elektrische Leitfähigkeit auf, so dass sich solche Werkstoffe gut als mindestens eine Zusatzlage zur Isolation der mindestens einen Funktionslage eignen. Auch können durch das Vorsehen nicht-metallischer Werkstoffe weitere Materialeigenschaften des Elektrobands positiv beeinflusst werden.

Durch die dem Graphen bzw. dem Graphit eigene hohe Wärmeleitfähigkeit wird gemäß einer Ausführungsform ein Elektroband mit verbesserter Wärmeleitfähigkeit angegeben, so dass die beispielsweise durch Verlustprozesse entstandene Wärme im Elektroband schneller abgeführt werden kann. Darüber hinaus stellt Graphen bzw. Graphit ein sehr flexibles, biegsames, transparentes und extrem zugfestes Material dar, so dass die mechanischen Eigenschaften und insbesondere die Verarbeitbarkeit des Verbundmaterials aufweisend mindestens eine Funktionslage und mindestens eine Zusatzlage verbessert werden.

Bei einer weiteren Ausführungsform weisen mindestens zwei Funktionslagen unterschiedliche ferromagnetische Werkstoffe auf und/oder weisen mindestens zwei Zusatzlagen unterschiedliche nicht magnetisierbare Werkstoffe auf. Auf diese Weise ist es möglich ein Elektroband bereitzustellen, das eine hohe Flexibilität der Kombination verschiedener Werkstoffe und somit

**EP 4 082 772 B1**

verbesserte Optimierungsmöglichkeiten hinsichtlich unterschiedlicher Anwendungen aufweist. Beispielsweise ist es möglich, in den weiter außen liegenden Lagen des Elektrobands höhere Anteile bestimmter Legierungselemente vorzusehen, die beispielsweise zu einer verbesserten Korrosionsbeständigkeit der äußeren Lagen beitragen.

Des Weiteren ist es bevorzugt, dass die Materialeigenschaften in der mindestens einen Funktionslage und/oder in der mindestens einen Zusatzlage variieren. Somit können in der Fläche der Lagen unterschiedliche ferromagnetische Eigenschaften bzw. unterschiedliche elektrische oder thermische Leitfähigkeiten eingestellt und erreicht werden. Dazu werden abschnittsweise unterschiedliche Materialien in einer der Lagen vor dem Verbinden angeordnet, die nach dem Verbinden, insbesondere nach dem Plattieren, miteinander verbunden sind. Somit kann beispielsweise für ein bestimmtes Elektromotordesign ein Stator hergestellt werden, bei dem im Inneren des Motors eine hohe Wärmeleitfähigkeit mit mindestens einer Kupfer enthaltenden Zusatzlage zum Abführen der entstehenden Wärmeenergie und außerhalb des Motors mindestens eine Aluminium enthaltende Zusatzlage zur Gewichtsreduzierung vorgesehen sind.

Auch können die Anteile an Legierungselementen mit unterschiedlichen Diffusionseigenschaften in den Lagen, beispielsweise in verschiedenen Zusatzlagen und/oder in verschiedenen Funktionslagen, variiert werden. Bei einem Wärmeeintrag von außen, der sich ins Innere des Materials graduell abschwächt, ist es so möglich, eine über die Gesamtdicke des Elektrobands gleichmäßige thermische Diffusion zu erreichen. Auch können als Diffusionsbarrieren wirkende Legierungselemente in einzelne Lagen eingebracht werden. So kann, insbesondere bereits bei der Herstellung des Elektrobands, eine gezielte Beeinflussung der elektrischen Eigenschaften in unterschiedlichen Bereichen des Elektrobands erfolgen.

Bevorzugt weisen verschiedene Bereiche des dreidimensionalen Aufbaus des Elektrobands verschiedene Materialeigenschaften, insbesondere verschiedene magnetische Eigenschaften, auf. Dies ermöglicht die Herstellung eines Musters elektrisch leitender und/oder magnetisch verbundener Bereiche innerhalb eines Elektrobands. Weiterhin ist das Einbringen von Legierungselementen zur gezielten Beeinflussung der Gefügestruktur, beispielsweise zur Bindung von Verunreinigungen an Korngrenzen, möglich. Auf diese Weise können durch reinere Werkstoffe, insbesondere reinere Funktionslagen, die Ummagnetisierungsverluste des Elektrobands weiter verringert werden. Insbesondere durch das Vorsehen anisotroper Gefügestrukturen können unterschiedliche Materialeigenschaften in einer Richtung parallel zur Lagenebene und in einer Ebene orthogonal zur Lagenebene erreicht werden.

Weiterhin ist es möglich, dass bei Verwendung mehrerer Funktionslagen mindestens zwei Funktionslagen oder mehrere Funktionslagen unterschiedliche Dicken aufweisen. Ebenso können bei Verwendung mehrerer Zusatzlagen diese mehreren Zusatzlagen unterschiedliche Dicken aufweisen. Auf diese Weise wird ein Elektroband mit einer hohen geometrischen Flexibilität zur gezielten Anpassung an den bei der jeweiligen Anwendung vorhandenen Bauraum angegeben. Somit ist eine besonders feingliedrige Einstellung optimierter Materialeigenschaften des Elektrobands möglich.

Gemäß einer weiteren bevorzugten Ausführungsform zur Lösung des oben genannten technischen Problems wird eine Anordnung aus Elektrobändern, insbesondere aus Elektroblechen angegeben, wobei mindestens zwei Elektrobänder in einem Stapel angeordnet sind und wobei zwischen mindestens zwei Elektrobänder eine Trennschicht, insbesondere eine Lackschicht, vorgesehen ist und wobei die Elektrobänder nach einem der vorangehenden Ausführungsformen ausgebildet sind.

Solch eine Anordnung bzw. Stapel wird auch als Lamellenpaket bezeichnet und kann beispielsweise als Teil von Statoren und/oder Rotoren eines Elektromotors verwendet werden. Durch die verbesserten Eigenschaften, insbesondere hinsichtlich der Ummagnetisierungsverluste, der einzelnen Elektrobänder kann die Leistungsübertragung mittels des Lamellenpakets bei der Leitung und Verstärkung von Magnetfeldern verbessert werden. Die Trennschicht dient dabei der Isolierung der einzelnen Elektrobänder untereinander und optimiert weiterhin durch eine Verringerung der Ummagnetisierungsverluste die Effizienz des Lamellenpakets.

Das oben aufgezeigte technische Problem wird erfindungsgemäß gemäß einer weiteren Lehre auch durch die Verwendung eines Elektrobands, insbesondere eines Elektroblechs als Eisenkern gelöst, wobei das Elektroband nach einem der zuvor erläuterten Beispiele und Varianten ausgebildet ist. Insbesondere wird das Elektroblech als Eisenkern eines Elektromagneten verwendet, insbesondere in einem Transformator bzw. Übertrager oder in einem Elektromotor oder für Relais, Schalter, Schaltschützen, Drosselspulen, Zündspulen, Stromzählern und steuerbaren Ablenkmagneten.

Als Eisenkern, auch genannt Magnetkern oder magnetischer Kern, wird vorliegend ein Bauteil verstanden, aus dem zusammen mit elektrischen Leitern und mechanischen Teilen ein elektrisches oder elektronisches Bauelement, auch genannt Induktivität, hergestellt werden kann. Eisenkerne aus Elektroblechen zeichnen sich vor allem durch skalierbare Baugrößen aus und finden in vielfältigen Anwendungen, von kleinen Netztransformatoren in Streichholzschachtelgröße über Transformatoren und Elektromotoren bis hin zu Kraftwerksgeneratoren, Verwendung.

Die Verwendung eines Elektrobands nach einem der zuvor erläuterten Beispiele und Varianten als Eisenkern ermöglicht eine große Flexibilität in Bezug auf die Baugröße des elektrischen oder elektronischen Bauelements bei gleichzeitiger Optimierung der Energieumwandlung. Insbesondere kann durch die Verwendung von mindestens einer Funktionslage mit den genannten geringen Dicken die Dicke des Elektrobands flexibel gestaltet und insbesondere verringert werden. Weiterhin wurde erkannt, dass durch die Verwendung eines Elektrobands nach einem der zuvor erläuterten Beispiele und Varianten als Eisenkern die Ummagnetisierungsverluste, im Besonderen die Hysterese- und Wirbelstromverluste, des Eisenkerns verringert werden können. Durch den Aufbau des Elektrobands als Verbundmaterial aufweisend die zuvor beschriebene mindestens eine Funktionslage und die zuvor beschriebene mindestens eine Zusatzlage werden die aufgrund von elektromagnetischer Induktion hervorgerufenen Wirbelströme räumlich auf die mindestens eine Funktionslage begrenzt, so dass Wirbelstromverluste verringert werden können.

Besonders vorteilhaft ist auch die Verwendung mehrerer Elektrobänder, die beispielsweise in einem Stapel übereinander angeordnet sein können, als Eisenkern. Die mehreren Elektrobänder des Stapels können mittels einer Trennschicht, insbesondere Lackschicht miteinander verklebt oder anderweitig verbunden sein.

Durch ein Elektroband gekennzeichnet durch den oben beschriebenen Verbund durch Adhäsionsbildung mit atomarer Diffusion lassen sich gezielt solche Materialeigenschaften beeinflussen, die maßgeblich Einfluss auf die Konstruktionsparameter eines Eisenkerns haben. Beispielsweise kann durch das Vorsehen von mindestens einer Zusatzlage mit im Bezug zur mindestens einen Funktionslage geringerer Materialdichte das Gewicht des Eisenkerns reduziert werden. Auch lässt sich durch gezielte Materialauswahl der mindestens einen Zusatzlage sowie mittels des beschriebenen Verbunds ein Elektroband und somit ein Eisenkern mit verbesserter Wärmeleitfähigkeit realisieren. Dies ist besonders vorteilhaft bei hohen Leistungsdichten, die schnell zu einer Überhitzung des Eisenkerns führen können. So wird durch die Verwendung des beschriebenen Elektrobands auch ein Betrieb des elektrischen oder elektronischen Bauteils bei höheren Temperaturen ermöglicht. Insgesamt kann so folglich die Energieumwandlung mithilfe der Verwendung des beschriebenen Elektrobands als Eisenkern effizienter gestaltet werden.

Vorteilhaft ist die Verwendung des beschriebenen Elektrobands als Eisenkern, als Magnetkern für niederfrequente (Netzfrequenz bis wenige kHz) Anwendungen und große und sehr große Leistungen bis in den Megawattbereich hinein. Insbesondere kann ein zuvor beschriebenes Elektroband als Eisenkern vorteilhaft für Statoren oder in Übertragern sowie generell für elektrische Maschinen verwendet werden. Durch eine geeignete Wahl der Materialien können auch weitere Eigenschaften eines Eisenkerns wie Zugfestigkeit beeinflusst werden.

Das oben aufgeführte technische Problem wird erfindungsgemäß auch gelöst durch ein Verfahren zur Herstellung eines Elektrobands, bei dem mindestens eine Funktionslage bereitgestellt wird, wobei die mindestens eine Funktionslage zumindest teilweise, vorzugsweise vollständig, aus einem ferromagnetischen Werkstoff besteht, bei dem mindestens eine Zusatzlage bereitgestellt wird, wobei die mindestens eine Zusatzlage zumindest teilweise, vorzugsweise vollständig, aus einem nicht magnetisierbaren Werkstoff besteht, bei dem die mindestens eine Funktionslage und die mindestens eine Zusatzlage angrenzend zueinander, insbesondere übereinander, angeordnet werden und bei dem zwischen der mindestens einen Funktionslage und der mindestens einen Zusatzlage durch Anwendung von Druck eine Adhäsionsbindung mit atomarer Diffusion erzeugt wird, und bei dem mindestens eine Funktionslage auf eine Dicke im Bereich von 2 bis 100 μm, bevorzugt von 2 bis 60 μm, gebracht wird.

Durch das Verfahren wird ein individueller Verbundaufbau aus Lagen unterschiedlicher Werkstoffe sowie eine Variation der Schichtdicken der einzelnen Lagen bei hoher Haftfestigkeit der Lagen untereinander ermöglicht. Insbesondere werden die mindestens eine Funktionslage und die mindestens eine Zusatzlage miteinander zu einem Verbundmaterial verbunden. Insgesamt ist so eine gezielte Anpassung der Eigenschaften des Elektrobands an verschiedenartige Anwendungen möglich. Insbesondere können so durch gezielte Materialauswahl der Lagen die magnetischen Eigenschaften des Elektrobands positiv beeinflusst und Ummagnetisierungsverluste, besonders vorteilhaft Wirbelstrom- und Hystereseverluste, gesenkt werden. Des Weiteren kann durch die Auswahl von Materialien mit unterschiedlicher Wärmeausdehnung, ein sogenanntes Arbeiten der Lagen untereinander, und die dadurch entstehenden Belastungen positiv beeinflusst werden. Beispielsweise kann so durch den Ausgleich der Wärmeausdehnung der Lagen untereinander die Gesamtwärmeausdehnung des Elektrobands verringert werden. Dies erlaubt ein optimiertes Design des Bauteils, beispielsweise des Motors, in dem das Elektroband als Elektroblech Anwendung findet.

Bei dem Verfahren wird für die mindestens eine Funktionslage ein sich von dem Werkstoff der mindestens einen Zusatzlage unterscheidender Werkstoff verwendet. Somit wird ein Verbundmaterial mit Eigenschaften hergestellt, die zwischen den Extremwerten der materialspezifischen Eigenschaften der Bindungspartner liegen. Auch ist mittels des oben genannten Verfahrens eine Variation der Schichtdicken der einzelnen Lagen möglich, so dass die gewünschten Eigenschaften des Elektrobands weiter gezielt beeinflusst werden können.

Bevorzugt besteht die mindestens eine Funktionslage zumindest teilweise, vorzugsweise vollständig, aus einem ferromagnetischen Werkstoff, insbesondere aus einem der oben genannten ferromagnetischen Werkstoffe. Weiter bevorzugt besteht die mindestens eine Zusatzlage zumindest teilweise, vorzugsweise vollständig, aus einem nicht magnetisierbaren Werkstoff, insbesondere aus einem der oben genannten Werkstoffe. Auch andere Werkstoffkombinationen, beispielsweise metallischer Werkstoffe oder kohlenstoffhaltiger Werkstoffe, insbesondere Graphen, sind möglich.

Das Verfahren ermöglicht auch das Herstellen eines Elektrobands mit mehreren Funktionslagen sowie mehreren Zusatzlagen, wobei die Funktionslagen und Zusatzlagen bevorzugt in abwechselnder Reihenfolge angeordnet sind. So ist es beispielsweise möglich, ein Verbundmaterial mit isolierenden Zusatzlagen zu erzeugen. Bevorzugt wird zwischen jeweils einer Zusatzlage und einer Funktionslage durch Anwendung von Druck eine Adhäsionsbindung mit atomarer Diffusion erzeugt.

Alternativ können auch mehrere Funktionslagen oder mehrere Zusatzlagen aneinander angrenzend angeordnet werden, so dass durch Verwendung von Lagen mit einheitlicher Schichtdicke durch ein solches Anordnen die Dicke einer aus gleichartigen Lagen bestehenden Schicht variiert werden kann. Beispielsweise kann durch das Anordnen mehrerer Funktionslagen übereinander eine Funktionslagenschicht mit einer variablen Dicke, die ein Vielfaches der Dicke einer einzelnen Funktionslage darstellt, erzeugt werden. Auch kann durch das Anordnen mehrerer Zusatzlagen übereinander eine Isolationswirkung gegenüber den an die Zusatzlagenschicht angrenzenden Funktionslagen verstärkt werden.

Bei dem oben genannten Verfahren werden die Bindungspartner, vorliegend die mindestens eine Funktionslage und die mindestens eine Zusatzlage, aneinander angrenzend angeordnet und in innigen Kontakt gebracht, insbesondere auf atomare Abstände angenähert. Dem übereinander Anordnen der Lagen kann ein Reinigungsprozess vorangehen, bei dem die in Kontakt tretenden Oberflächen beispielsweise von absorbierten Gasen, Oxidschichten oder Verunreinigungen wie Ölrückständen befreit werden.

Durch den Reinigungsprozess und insbesondere durch das Entfernen der Oxidschichten wird die Bindungsfähigkeit der Oberflächen der Bindungspartner erhöht. Die Oxidschichten und allgemein die Oberflächenschichten der Bindungspartner können auch durch weitere Prozesse, beispielsweise Umformprozesse, zur Erhöhung der Oberflächenreaktivität aufgebrochen bzw. aufgeraut werden. Auch werden weitere Prozesse wie Walzen oder Strecken verwendet, um oberflächennahe Bereiche der Bindungspartner zu verfestigen und hochaktive Oberflächen zu erzeugen.

Durch Anwendung von Druck werden die zu verbindenden Oberflächen großflächig in innigen Kontakt zueinander gebracht, wobei der Druck auch in Verbindung mit anderen Prozessen, beispielsweise einem Umformprozess aufgebracht werden kann. Der Verbund durch die Adhäsionsbindung zwischen den Bindungspartnern bildet sich durch eine Vermischung mittels atomarer Diffusion, wobei eine Übergangsschicht ausgebildet wird, über die eine kontinuierliche Anpassung der Materialeigenschaften stattfindet. Zusätzlich ist es möglich weitere Energie in Form von Wärme einzubringen, womit die atomare Diffusion verstärkt werden kann. Eine Adhäsionsbindung mit atomarer Diffusion kann allerdings auch ohne zusätzliches Einbringen von Wärme erzeugt werden. Das Einbringen von Druck, beispielsweise mittels Aufeinanderpressen der Bindungspartner, und das Einbringen weiterer Energie, beispielsweise in Form von Wärme, können gleichzeitig oder zu unterschiedlichen Zeitpunkten erfolgen.

Ein Einbringen weiterer Energie kann darüber hinaus die Ausdehnung der Übergangsschicht beeinflussen, wobei diese allgemein abhängig von den jeweiligen Werkstoffen der Bindungspartner ist. Ein Vergrößern der Ausdehnungszone und ein Verstärken der atomaren Diffusion kann gezielt zur Beeinflussung der Materialeigenschaften des Elektrobands eingesetzt werden. Beispielsweise führt die Vergrößerung der Ausdehnungszone und Verstärkung der atomaren Diffusion zu einer stärkeren Durchmischung des Verbundmaterials, dies kann eine erhöhte elektrische Leitfähigkeit und/oder eine erhöhte Wärmeleitfähigkeit und eine erhöhte Formstabilität des Elektrobands begünstigen.

Zusätzlich kann durch das Einbringen von Energie und Wärme gezielt die Gefügestruktur des Verbundmaterials beeinflusst werden. Beispielsweise kann eine Rekristallisation der Materialien, beispielsweise der mindestens einen Funktionslage und/oder der mindestens einen Zusatzlage, stattfinden. Auch kann der Grad der Verfestigung der Materialien, beispielsweise der mindestens einen Funktionslage und/oder der mindestens einen Zusatzlage, beeinflusst werden.

Das oben beschriebene Verfahren kann beispielsweise als Plattieren verstanden werden, wobei im englischen Sprachgebrauch der Begriff "cladding" vorwiegend zur Beschreibung eines solchen Verfahrens verwendet werden kann. Vorwiegend wird mit dem oben beschriebenen Verfahren eine metallische Bindung von jeweils zwei Bindungspartner erzeugt. Auch eine Adhäsionsbindung mit atomarer Diffusion von metallischen Werkstoffen mit nicht-metallischen Werkstoffen, beispielsweise kohlenstoffhaltigen Werkstoffen, oder zwischen nicht metallischen Werkstoffen kann erzeugt werden.

Gemäß einer bevorzugten Ausführungsform des Verfahrens werden zumindest eine der mindestens einen eine Funktionslage und/oder zumindest eine der mindestens einen Zusatzlage wärmebehandelt. Durch eine Wärmebehandlung können gezielt Materialeigenschaften, insbesondere die Gefügestruktur, beeinflusst werden. Dabei können einzelne oder mehrere Lagen vor dem Verbinden getrennt wärmebehandelt oder mehrere Lagen zusammen bei oder nach dem Verbinden zusammen wärmebehandelt werden.

Die Wärmebehandlung einzelner Lagen vor dem Verbinden bietet die Möglichkeit, gezielt die Materialeigenschaften nur einiger der mehreren Lagen eines Elektrobands, beispielsweise der außen angeordneten Lagen, gezielt zu beeinflussen. So können die Gefügestruktur und die sich daraus ergebenden elektromagnetischen Eigenschaften einzelner Lagen gezielt verändert werden. Beispielsweise kann eine Wärmebehandlung zu verstärktem Kornwachstum oder der Bildung von Ausscheidungen einzelner Elemente, insbesondere Legierungselemente, führen.

Eine Wärmebehandlung mehrerer Lagen beim Verbinden kann die atomare Diffusion zwischen den Lagen verstärken und so die Haftfestigkeit der zu verbindenden Lagen erhöhen. Mittels einer Wärmebehandlung nach dem Verbinden kann eine weitere Einstellung der Materialeigenschaften, insbesondere der Gefügestruktur, erfolgen, auch kann die Haftfestigkeit auf diese Weise weiter erhöht werden.

Bei einer weiteren bevorzugten Ausführungsform des Verfahrens werden die mindestens eine Funktionslage und die mindestens eine Zusatzlage mittels Kaltwalzplattieren miteinander gefügt. Auf diese Weise ist es möglich, Umform- und Diffusionsprozesse bei der Herstellung eines Elektrobands voneinander zu trennen.

Auch lässt sich ein Verbund durch Kaltwalzplattieren wie ein homogenes Material durch Kaltwalzen weiterverarbeiten.

Im Rahmen des Kaltwalzplattierprozesses kann zunächst eine Vorbehandlung der Bindungspartner, vorliegend beispielsweise der mindestens einen Funktionslage und der mindestens einen Zusatzlage, erfolgen. Hier werden die zu plattierenden Werkstoffe entfettet und zeitnahe zum Plattierprozess, typischerweise durch Mattieren mit Stahldrahtbürsten, aktiviert. Bei einigen Werkstoffen kann ein Aktivieren nicht erforderlich sein. In einem nächsten Schritt werden die zu verbindenden Lagen gemeinsam kaltgewalzt, wobei eine wesentliche Dickenabnahme verbunden mit einer erheblichen Längung der Materialkombination erzielt werden kann.

Vor und/oder während der Durchführung des Kaltwalzplattierens kann es vorteilhaft sein, wenn mindestens eine der Lagen erwärmt wird, wobei eine Temperatur von 50 bis 500°C bevorzugt ist. Das Vorwärmen kann auch durch indirekte Materialerwärmung mittels Erwärmen der Anlage, in der das Kaltwalzplattieren durchgeführt wird, erfolgen, Das Vorwärmen entspricht nicht einem Warmwalzplattieren, da hierbei Temperaturen im Bereich des Schmelzpunktes gewählt werden. Die Temperatur des Anwärmens führt zu einer verbesserten Reaktivität der Oberflächen der Lagen, so dass sich die Lagen besser miteinander verbinden. Die Temperaturen, die anschließend beim Kaltwalzen durch Streckung des Materials und durch ein Aufbrechen der Oberflächen entstehen, liegen dann beispielsweise im Bereich von bis zu 400°C. Während des Kaltwalzens kann zudem ein zusätzliches Erwärmen bei Temperaturen unterhalb der Rekristallisationstemperatur des Walzguts vorgesehen sein.

Durch die Anwendung eines hohen Drucks beim Walzen können unter Luftabschluss neue hochaktive Oberflächen zwischen den zu verbindenden Lagen entstehen und diese können in innigen Kontakt zueinander gebracht werden. Durch Adhäsionskräfte, mechanische Verklammerungen und punktuell bereits beginnende Bindungen kann eine erste Haftung der zu verbindenden Lagen erzielt werden.

Im direkten Anschluss an den Plattierprozess kann ein Haftungsglühen bzw. ein Diffusionsglühen erfolgen, bei dem mittels Wärmebehandlung Umordnungsprozesse auf atomarer Ebene aktiviert oder verstärkt werden und noch unvollständig haftende Lagen in einen Verbund umgewandelt werden können. Bei einigen Materialkombinationen ist jedoch bereits die beim Plattieren generierte Haftung ausreichend, so dass auf eine Haftungsglühung verzichtet werden kann. Im Falle einer Wärmebehandlung können die Prozessparameter dahingehend optimiert sein, dass eventuell auftretende intermetallische Schichten vermieden oder minimiert werden. Zusätzlich kann eine Rekristallisation der durch den Plattiervorgang möglicherweise stark kaltverfestigten Materialien stattfinden. Somit wird das für die Weiterverarbeitung des Materials notwendige Umformpotential wiederhergestellt.

In einem weiteren Schritt kann der Materialverbund bis fast auf Enddicke gewalzt werden. Es kann außerdem eine weitere Wärmebehandlung zur Einstellung der Festigkeits- und Gefügeeigenschaften des Elektrobands erfolgen. Bei sehr dünnen Endabmessungen kann es erforderlich sein, aufgrund einer hohen Gesamtumformung, mehrere Walz- und/oder Glühzyklen durchzuführen. Andererseits ist es insbesondere bei dickeren Endabmessungen auch möglich, direkt auf Enddicke zu plattieren und auf einen anschließenden Walzprozess zu verzichten.

Anschließend kann ein Dressieren, ein Fertigwalzen mit geringem Umformgrad erfolgen, ebenso wie ein Streckbiegerichtvorgang, bei dem der Materialverbund eine im weichgeglühten Zustand eventuell auftretende Streckgrenzendehnung genommen werden kann. Durch verschiedene Walzenrauigkeiten können gleichzeitig gezielte Oberflächenausführungen - von rau bis blank oder auch isotrop oder strukturiert, z.B. durch Laserstrukturieren (Ätzen) der Oberflächen oder indirekt durch Laserstrukturieren (Ätzen) der verwendeten Walzen- eingestellt werden. Auf den Dressierschnitt kann auch verzichtet werden, insbesondere wenn spezifische Oberflächenausführungen keine Rolle spielen.

Weiter kann, insbesondere als abschließender Verfahrensschritt, ein Längsteilen vorgesehen sein, bei dem das Material auf Endbreite längsgeteilt und/oder an den Kanten besäumt wird.

Gemäß einer alternativen Ausführungsform des Verfahrens werden die mindestens eine Funktionslage und die mindestens eine Zusatzlage mittels Warmwalzplattieren miteinander verbunden. Beim Warmwalzplattieren erfolgt die Verbindung der Lagen während eines Warmwalzprozesses bei Temperaturen oberhalb der Rekristallisationsschwelle. Dazu werden die zu verbindenden Lagen typischerweise vor dem Walzen zu einem Paket zusammengefügt und als gesamte Einheit warm ausgewalzt. Die Bindung kann zeitgleich durch Diffusionsvorgänge entstehen, zu deren Aktivierung eine bestimmte Temperatur benötigt wird.

Gemäß einer weiteren alternativen Ausführungsform des Verfahrens werden die mindestens eine Funktionslage und die mindestens eine Zusatzlage mittels Sprengplattieren miteinander verbunden. Durch eine Herstellung mittels Sprengplattieren erfolgt keine thermische Energieeinbringung während des Plattierprozesses, wodurch die Ausbildung spröder intermetallischer Phasen verhindert werden kann.

Unabhängig von der jeweiligen oben beschriebenen Ausführungsform des Verfahrens, liegt das Elektroband üblicherweise nach dem Verbinden in Form eines Bands vor. Das bandförmige Elektroband kann der Durchführung des erfindungsgemäßen Verfahrens, insbesondere nach dem Plattieren, weiter verarbeitet, beispielsweise umgeformt, zugeschnitten und gefügt werden. Aufgrund der guten Hafteigenschaften ist es möglich, das Elektroband wie ein homogenes Material umzuformen. Verwendete Umformverfahren sind typischerweise Walzen, Biegen, sowie Tief- bzw. Streckziehen, Innenhochdruckumformung oder Walzprofilieren.

Weiterhin kann ein mechanisches Trennen, wie Schneiden oder Stanzen, vorgesehen sein. Auch thermische Trennverfahren und eine Bearbeitung mittels Laser sind möglich. Des Weiteren können chemisches Ätzen, Drahterodieren oder Wasserstrahlschneiden angewendet werden. Diese Verfahren erhöhen in vorteilhafter Weise nicht oder nur unwesentlich den k-Formfaktor bei der Berechnung der Ummagnetisierungsverluste. Das Vorsehen von Zusatzlagen, insbesondere aufweisend nicht magnetisierbare Werkstoffe, bevorzugt aluminiumhaltige Werkstoffe, kann auch Vorteile im Hinblick auf durch das Trennverfahren beeinflusste Materialeigenschaften bieten. So kann beispielsweise durch das Vorsehen von Zusatzlagen aufweisend korrosionsbeständige Werkstoffe, beispielsweise Werkstoffe, die Aluminium oder andere reaktive Legierungselemente enthalten, insbesondere an den Schnittkanten eines Elektroblechs Korrosion verzögert werden.

Einzelne Elektrobänder können zu einem Paket gefügt werden, dies wird allgemein als Paketieren bezeichnet. Ein Paket zumindest teilweise, vorzugsweise vollständig, bestehend aus mindestens einem erfindungsgemäßen Elektroband lässt eine nahezu unveränderte Weiterverarbeitung in bekannten standardisierten Prozessen zu, so dass sich eine Anpassung der an die an das erfindungsgemäße Verfahren möglicherweise anschließenden weiteren Prozessschritte erübrigt.

Auch ein als Stanzpaketieren bekanntes einstufiges Verfahren, bei dem das Elektroband ausgestanzt, auf einem Stapel abgelegt und mit dem Stapel verbunden wird, kann vorgesehen sein.

Weitere Merkmale und Vorteile der Erfindung ergeben sich aus der nachfolgenden Beschreibung von Ausführungsbeispielen, wobei auf die beigefügte Zeichnung Bezug genommen wird.

In der Zeichnung zeigen

Fig. 1a-d     verschiedene Ausführungsbeispiele eines erfindungsgemäßen Elektrobands in Form eines Elektroblechs,

Fig. 2a-b     Schritte eines Ausführungsbeispiels des erfindungsgemäßen Verfahrens zur Herstellung eines Elektrobands in Form eines Elektroblechs in schematischer Darstellung,

Fig. 3a-b     Ergebnisse von Versuchen an verschiedenen Elektrobänder in Form von Elektroblechen und

Fig. 4a-b     Hysteresemessungen an verschiedenen Elektrobändern in Form von Elektroblechen.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

Die Ausführungsbeispiele betreffen Elektrobleche, die als Beispiele für Elektrobänder beschrieben werden.

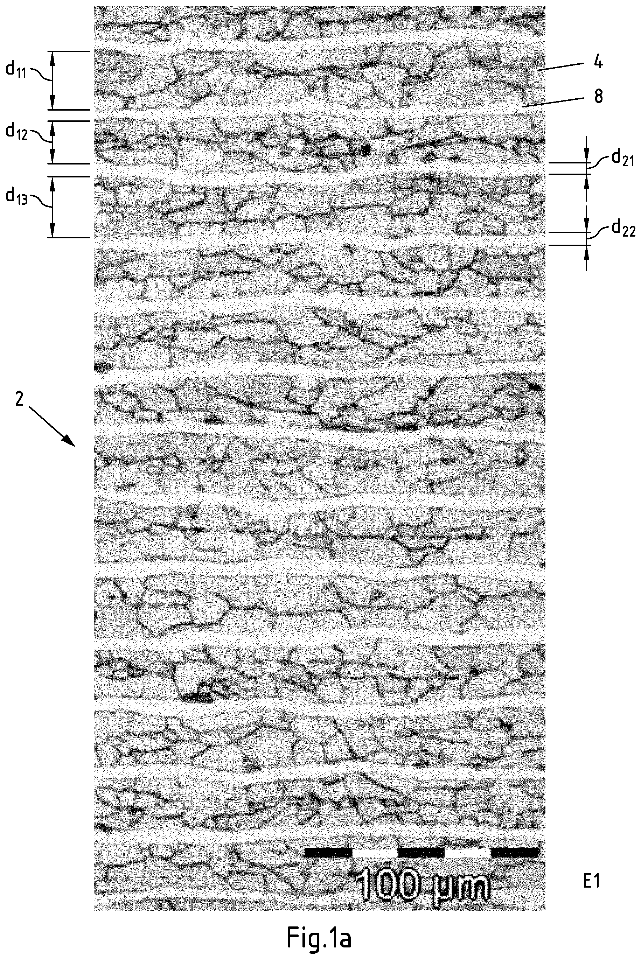

Die Fig. 1a bis Fig. 1d zeigen zunächst verschiedene Ausführungsbeispiele eines erfindungsgemäßen Elektroblechs 2.

In Fig. 1a ist in Form eines Ausschnitts eines Schliffbilds ein Aufbau eines Elektroblechs 2 aufweisend mehrere übereinander angeordnete Funktionslagen 4 aus einem ferromagnetischen Werstoff und Zusatzlagen 8 gezeigt, wobei die Funktionslagen 4 und die Zusatzlagen 8 jeweils in abwechselnder Reihenfolge angeordnet sind.

Die Funktionslagen 4 sind aus ferromagnetischem warmgewalzten Stahl der Güte DD11 (1.0332) hergestellt. Die Kornstruktur des ferromagnetischen Werkstoffs der Funktionslagen 4 ist dabei charakterisiert durch Korngrößen von weniger als 100 $\mu$m, wobei viele der Korngrößen im Bereich von 20 bis 50 $\mu$m liegen.

Die Zusatzlagen 8 sind in diesem Beispiel als durchgängige Lagen ausgebildet und trennen die Funktionslagen 4 voneinander. Der nicht magnetisierbare Werkstoff der Zusatzlagen 8 weist Kupfer (Cu) auf.

Vorliegend ist ein Elektroblech 2 mit Funktionslagen 4 von näherungsweise konstanter Dicke (Schichtdicke) $d_{1i}$ gezeigt, wobei i die jeweilige Funktionslage 4 indiziert und von 1 bis n, mit n der Anzahl an insgesamt vorhandenen Funktionslagen 4, läuft. Hier gilt also $d_{11} = d_{12} = d_{13} = ... = d_{1n}$, die Dicken sind näherungsweise konstant, variieren aber herstellungsbedingt über die Breite der Darstellung.

Alternativ können die Funktionslagen 4 mit Dicken $d_{1i}$, für die gilt $d_{11} \neq d_{12} \neq d_{13} \neq ... \neq d_{1n}$, die also

unterschiedliche Dicken $d_{1i}$ aufweisen, ausgebildet sein. Auch können nur einige der Funktionslagen 4 sich unterscheidende Dicken $d_{1i}$ aufweisen und andere Funktionslagen 4 näherungsweise konstante Dicken $d_{1i}$. Gleiches gilt für die Dicken $d_{2i}$ der Zusatzlagen 8.

Wie an dem Maßstab in Fig. 1a erkennbar ist, werden Schichtdicken $d_{1i}$ und $d_{2i}$ durchgängig von deutlich unter 100 $\mu$m, insbesondere von weniger als 60 $\mu$m erreicht.

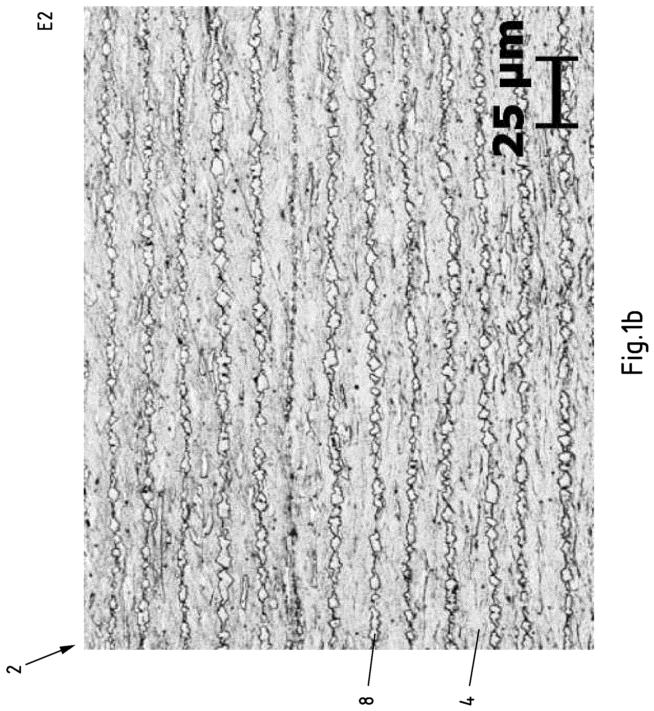

In Fig. 1b ist ebenfalls anhand eines Ausschnitts eines als Schliffbilds ein Aufbau eines Elektroblechs 2 ebenfalls aufweisend mehrere übereinander angeordnete Funktionslagen 4 und Zusatzlagen 8 gezeigt, wobei die Funktionslagen 4 und die Zusatzlagen 8 jeweils in abwechselnder Reihenfolge angeordnet sind. Die Funktionslagen 4 bestehen wieder aus dem Stahl DD11. Die Zusatzlagen 8 sind in diesem Beispiel als nicht durchgängige Lagen ausgebildet, so dass ein Kontakt der Funktionslagen 4 untereinander ermöglicht ist. Insbesondere ist in diesem Beispiel eine unregelmäßig ausgebildete Form der Zusatzlagen 8 und der Funktionslagen 4 gut sichtbar. Hier weisen die Zusatzlagen 8 den nicht magnetisierbaren Werkstoff Aluminium (Al) auf. Die Gefügestruktur des ferromagnetischen Werkstoffs ist besonders feinkörnig ausgebildet, die Dicke der Funktionslagen 4 beträgt weniger als 25 $\mu$m und die Zusatzlagen weisen eine Dicke von wenigen $\mu$m auf.

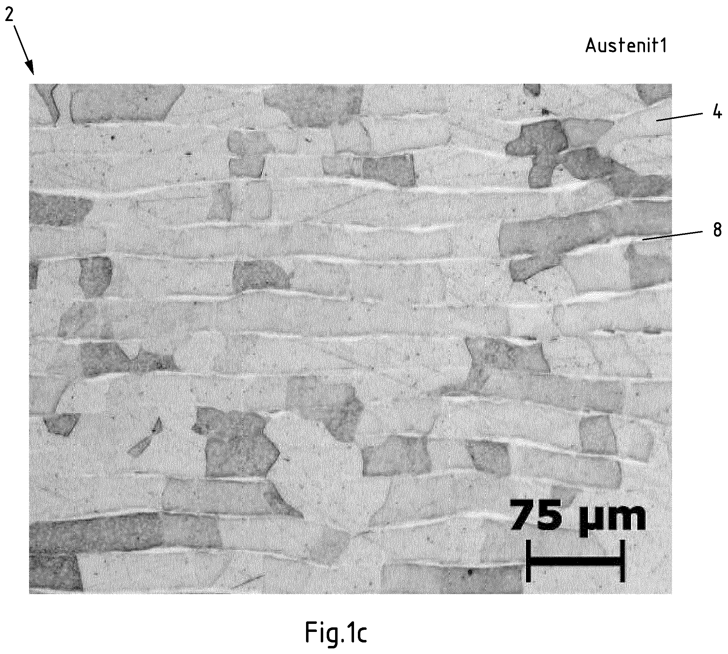

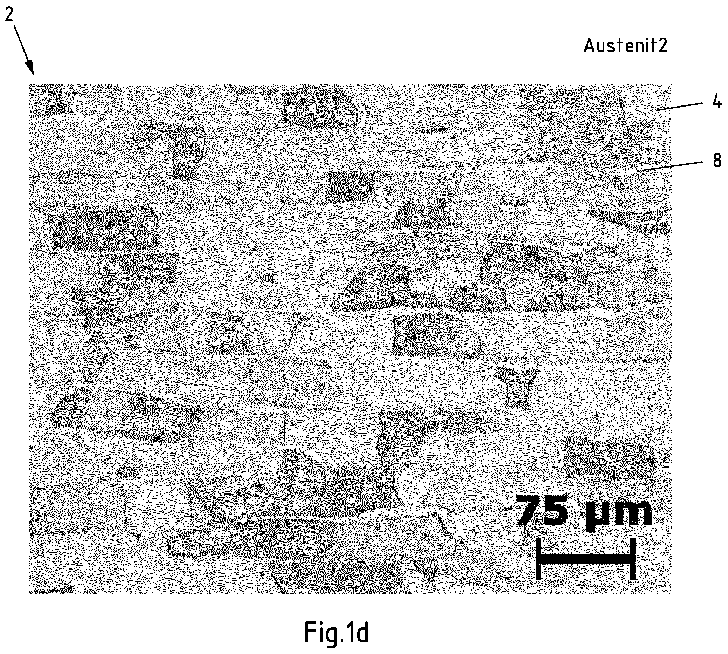

Fig. 1c und 1d zeigen ebenfalls in Form eines Ausschnitts eines Schliffbilds den Aufbau von Elektroblechen 2 aufweisend mehrere übereinander angeordnete Funktionslagen 4 und Zusatzlagen 8, wobei die Funktionslagen 4 und die Zusatzlagen 8 jeweils in abwechselnder Reihenfolge angeordnet sind. Die Funktionslagen 4 bestehen wieder aus dem Stahl DD11. Die Zusatzlagen 8 sind in diesem Beispiel als besonders dünne und teilweise nicht durchgängige Lagen ausgebildet, so dass auch hier an einigen Stellen ein Kontaktieren der Funktionslagen 4 untereinander ermöglicht ist. Auch ist hier das Vorhandensein eines inhomogenen Werkstoffs der Funktionslagen 4 gut sichtbar, wobei die unterschiedlichen Grauabstufungen in einzelnen Funktionslagen 4 auf eine variierende Zusammensetzung des ferromagnetischen Werkstoffs hinweisen.

Die Dicke der Funktionslagen 4 beträgt im Mittel unter 75 $\mu$m. In den in Fig. 1c und 1d gezeigten Beispielen weist der nicht magnetisierbare Werkstoff der Zusatzlagen 8 jeweils einen austenitischen Stahl (Austenit) auf. Auch ist möglich, dass die Zusatzlagen 8 auf dem Schliffbild durch ihre sehr geringe Dicke von weniger als 10 $\mu$m und darunter bei der gewählten Auflösung als nicht durchgängige Lagen erscheinen, sie aber dennoch eine intakte Isolation der Funktionslagen 4 voneinander ermöglichen.

Die in den Fig. 1a-d gezeigten Funktionslagen 4 und Zusatzlagen 8 der Ausführungsbeispiele eines Elektroblechs 2 sind durch eine Adhäsionsbindung mit atomarer Diffusion miteinander verbunden. Insbesondere in Fig. 1b ist eine auf mikroskopischer Ebene vorhandene Interdiffusion der verschiedenen Werkstoffe der Funktions- und Zusatzlagen 4, 8 untereinander ersichtlich.

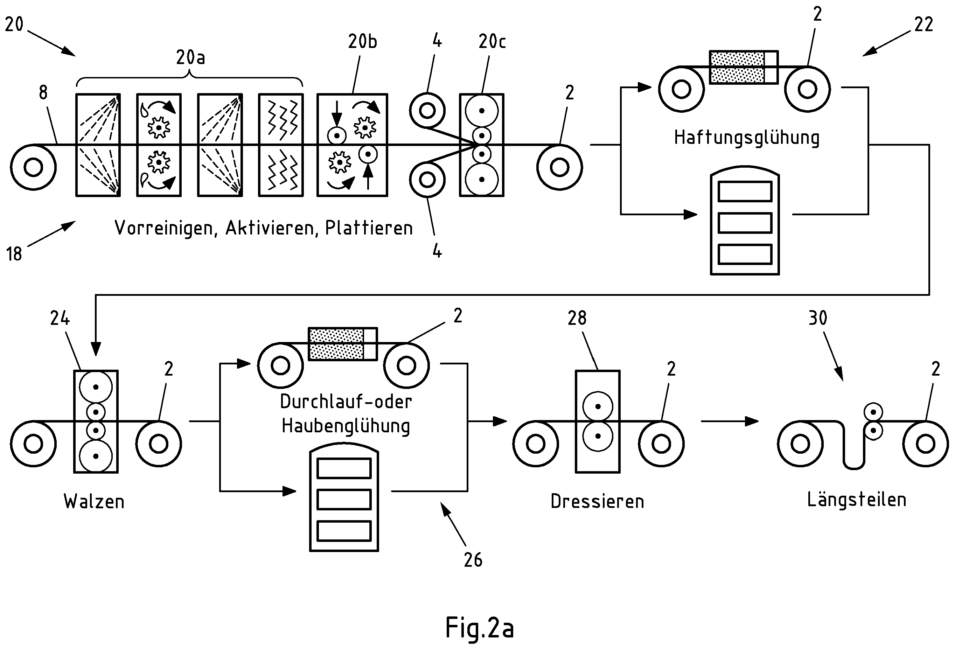

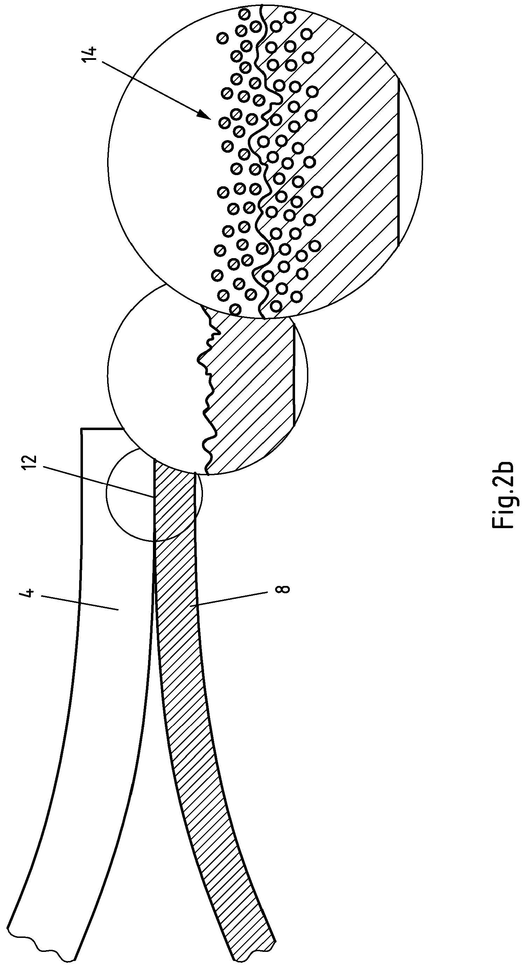

In Fig. 2a und 2b sind Schritte eines Ausführungsbeispiels des erfindungsgemäßen Verfahrens zur Herstellung eines Elektroblechs 2 in schematischer Darstellung gezeigt.

Fig. 2a zeigt zunächst den Verfahrensablauf mit einer Kaltwalzplattiervorrichtung 18, bei dem ein herzustellendes Elektroband 2 durch verschiedene Verfahrensschritte hergestellt wird. Dabei kann es sich beispielsweise um ein Elektroblech 2 nach den in Fig.1a-d gezeigten Ausführungsbeispielen handeln.

In einem ersten Verfahrensschritt 20 erfolgt zunächst eine Vorbehandlung der Bindungspartner, vorliegend ist die Vorbehandlung des Werkstoffs der Zusatzlage 8 dargestellt. In diesem ersten Verfahrensschritt 20 erfolgt eine Vorreinigung 20a, beinhaltend ein Entfetten der Oberflächen, sowie eine Aktivierung 20b, bei der die Oberflächen mechanisch aufgerissen werden. In dem gezeigten Beispiel wird der von oben und unten zugeführte und für die Funktionslagen 4 verwendete Werkstoff nicht aktiviert. Dies kann aber zusätzlich, je nach gewähltem Werkstoff der Funktionslagen 4, vorgesehen sein.

Weiter werden die zu verbindenden Lagen 4, 8 gemeinsam kaltgewalzt, wobei eine wesentliche Dickenabnahme erzielt wird. Vorliegend ist das Verbinden einer Zusatzlage 8 des Werkstoffs mit zwei Funktionslagen 4 des Werkstoffs gezeigt. Durch die in 20c gezeigten Walzen wird ein Druck auf die zu verbindenden Lagen 4, 8 ausgeübt, der die Lagen 4, 8 in innigen Kontakt auf atomarer Ebene miteinander bringt.

Es kann auch vorgesehen sein, dass die im Verfahrensschritt 20 gezeigten Schritte im Rahmen der Vorbehandlung, das Vorreinigen und Aktivieren, zusätzlich oder lediglich für den Werkstoff der Funktionslagen 4 erfolgen, und der Werkstoff der Zusatzlagen 8, je nach gewähltem Werkstoff, vor dem Verbinden der Lagen 4, 8 nicht vorbehandelt wird. So kann auch ein Verfahren vorgesehen sein, bei dem für den in Fig. 2a gezeigten Verfahrensschritt 20 der Werkstoff der Funktionslagen 4 anstelle des Werkstoffs der Zusatzlagen 8 tritt und die Vorbehandlung an einer Funktionslage 4 des Werkstoffs vor dem Verbinden mit Zusatzlagen 8 des Werkstoffs durchgeführt wird.

Fig. 2b zeigt einen vergrößerten Ausschnitt der Bildung eines Elektrobandes 2 durch Adhäsionsbindung 12 mit atomarer Diffusion 14. Diese Adhäsionsbindung 12 der Werkstoffe der jeweilig zu verbindenden Funktionslage 4 und Zusatzlage 8 wird bereits in dem ersten Verfahrensschritt 20 initiiert. Für einige Materialkombinationen reicht diese Adhäsionsbindung 12 für ein Elektroband 2 bereits aus.

Vorliegend erfolgt gemäß Fig. 2a in einem weiteren Verfahrensschritt 22 eine Haftungsglühung, auch genannt Diffusionsglühen, bei dem mittels Wärmebehandlung weitere Umordnungsprozesse 14 auf atomarer Ebene aktiviert oder verstärkt werden und noch unvollständig haftende Lagen 4, 8 in einen Verbund umgewandelt werden können. Bei einigen Materialkombinationen ist jedoch bereits die beim Plattieren generierte Haftung ausreichend, so dass auf eine Haftungsglühung verzichtet werden kann. Denn bereits beim Plattieren wird unabhängig davon, ob kalt oder warm gewalzt wurde, bereits eine Diffusionsbindung erzeugt,

Nach der Haftungsglühung erfolgt in einem nächsten Schritt 24 ein weiteres Walzen des Elektrobandes 2, bei dem dieser fast bis auf Enddicke gewalzt wird. Außerdem kann eine weitere Wärmebehandlung, auch genannt Haubenglühung, zur Einstellung der Festigkeits- und Gefügeeigenschaften des Elektroblechs 2 in einem anschließenden Schritt 26 erfolgen. Die Verfahrensschritte 24 und 26 können, insbesondere für sehr dünne Endabmessungen, mehrmals durchgeführt werden. Allerdings kann auch ein einmaliger Walz-/Glühzyklus 24, 26 ausreichend sein, insbesondere bei dickeren Endabmessungen.

In Fig. 2a ist ein weiterer Verfahrensschritt 28, das Dressieren, gezeigt, welches ein Fertigwalzen mit geringem Umformgrad bezeichnet, bei dem dem Materialverbund 32 eine im weichgeglühten Zustand eventuell auftretende Streckgrenzendehnung genommen werden kann. Bei diesem Schritt 28 können durch Walzen mit verschiedenen Walzenrauigkeiten gleichzeitig gezielte Oberflächenausführungen des Elektroblechs 2 eingestellt werden. Weiter ist als letzter Verfahrensschritt 30 vorliegend das Längsteilen dargestellt, bei dem der Materialverbund 32 auf Endbreite längsgeteilt wird.

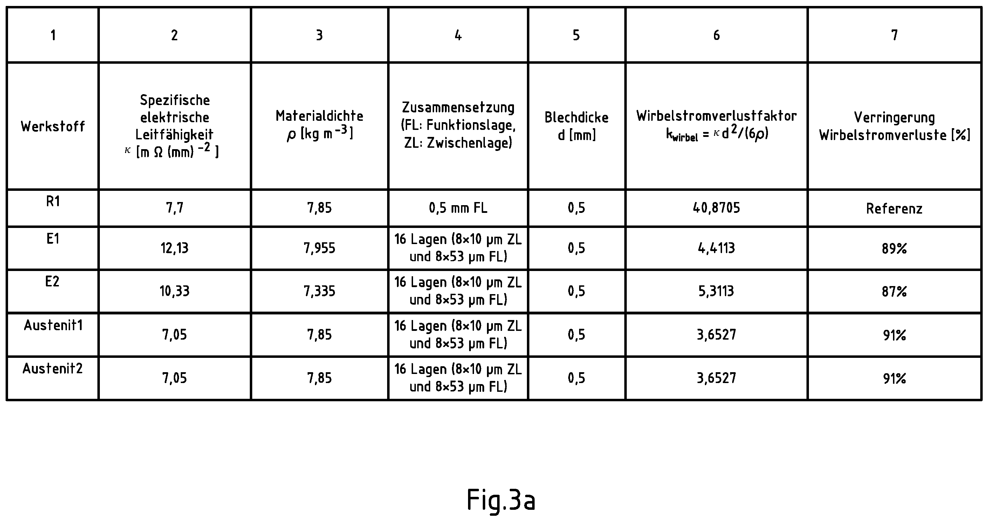

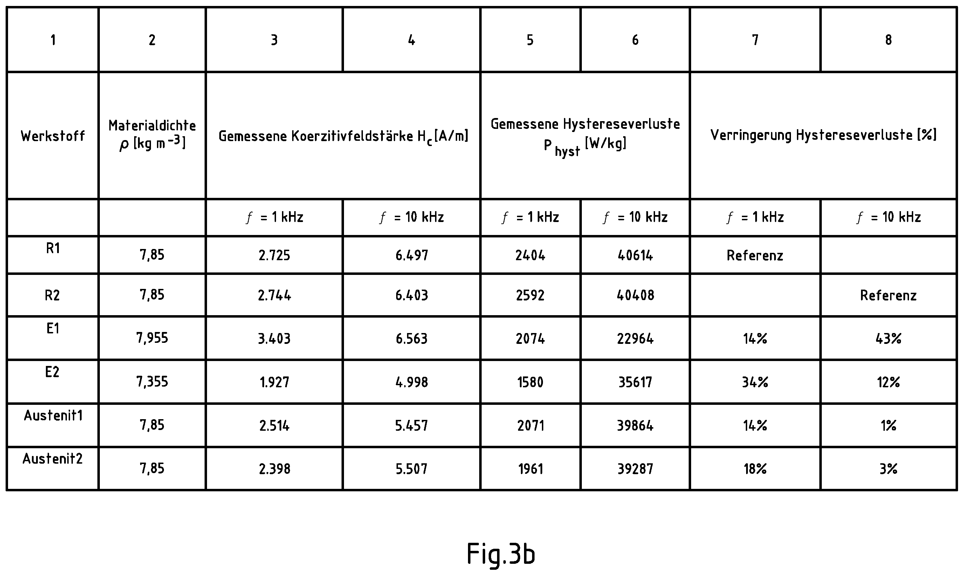

In Fig. 3a und 3b sind Ergebnisse von Versuchen in Form von Tabellen an verschiedenen Elektroblechen gezeigt, wobei erfindungsgemäße Ausführungsformen eines Elektroblechs 2 mit Referenzblechen aus dem Stand der Technik verglichen werden, wobei die Referenzbleche R1 und R2 aus dem Stahl DD11 hergestellt sind. Das Referenzblech R1 ist nach der Herstellung bei ca. 670 °C wärmebehandelt und das Referenzblech R2 ist nach der Herstellung bei ca. 1000 °C wärmebehandelt worden.

In der Tabelle in Fig. 3a sind für die erfindungsgemäßen Ausführungsformen von Elektroblechen E1, E2, Austenit1 und Austenit2 sowie für die Referenz R1 zunächst die Materialkenngrößen elektrische Leitfähigkeit $\kappa$, Materialdichte $\rho$ sowie die jeweilige Zusammensetzung der Elektrobleche, aus denen sich die Materialkenngrößen als arithmetisches Mittel über die einzelnen Lagen berechnen, angegeben.

Während die Referenz aus einer einzelnen Funktionslage in einer Blechdicke von 0,5 mm besteht, setzten sich die Elektrobleche E1, E2, Austenit1 und Austenit2 jeweils aus 16 Lagen zusammen: acht jeweils 10 $\mu$m dicke Zusatzlagen sowie acht jeweils 53 $\mu$m dicken Funktionslagen. Dabei weist das mit E1 bezeichnete Elektroblech einen Aufbau sowie eine Zusammensetzung gemäß Fig. 1a auf, die Elektrobleche E2, Austenit1 und Austenit2 entsprechen jeweils den Figuren 1b, 1c und 1d. Alle gelisteten Elektrobleche weisen eine Gesamtdicke bzw. Blechdicke von 0,5 mm auf, wie in Spalte 5 angegeben.

Die Funktionslagen bestehen - wie beschrieben - aus dem Stahl DD11, um eine Vergleichbarkeit mit den Referenzen R1 und R2 zu gewährleisten.

Weiter dient die Tabelle in Fig. 3a der Veranschaulichung der verringerten Wirbelstromverluste mittels der Ausführungsformen eines erfindungsgemäßen Elektroblechs 2. In Spalte 6 der Tabelle in Fig. 3a ist der für die jeweiligen Elektrobleche 2 berechnete Wirbelstromverlustfaktor $k_{wirbel} = \kappa^* d^2/(6^* \rho)$ angegeben, der gemäß $P_{wirbel} = k_{wirbel}(B_{max}f\pi)^2$ den materialspezifischen Wirbelstromverlust angibt. Insbesondere durch die Spalte 7 der Tabelle, die die im Vergleich zur Referenz R1 erzielte Verringerung des Wirbelstromverlusts der Elektrobleche E1, E2, Austenit1 und Austenit 2 angibt, wird deutlich, dass diese letztgenannten Elektrobleche Wirbelstromverluste deutlich, im Mittel um 90 %, reduzieren können. Diese Verringerung kann insbesondere auf die geringe Dicke der einzelnen Funktionslagen von jeweils weniger als 60 $\mu$m zurückgeführt werden.

In der Tabelle in Fig. 3b sind die mit Ausführungsformen eines erfindungsgemäßen Elektroblechs, E1, E2, Austenit1 und Austenit2, erzielten Hystereseverluste den Hystereseverlusten gegenübergestellt, die mit Elektroblechen aus den Referenzmaterialien R1 und R2 erzielt worden sind. Die Tabelle vergleicht die materialspezifischen Größen Materialdichte $\rho$, die gemessene Koerzitivfeldstärke $H_C$ und den bei Frequenzen von 1 kHz und 10 kHz gemessenen Hystereseverlust der jeweiligen Elektrobleche miteinander.

In den Spalten 7 und 8 der Tabelle ist die mittels der Elektrobleche E1, E2, Austenit1 und Austenit2 erzielte Verringerung des Hystereseverlusts bezogen auf die Referenz R1 bei einer Frequenz von 1 kHz und bezogen auf die Referenz R2 bei 10 kHz angegeben. Für jedes der Elektrobleche E1, E2, Austenit1 und Austenit2 wird eine Verringerung der Hystereseverluste erzielt. Bei einer Frequenz von 1 kHz lässt sich eine Verringerung von mindestens 14 % bis hin zu 34 % erzielen, bei einer Frequenz von 10 kHz eine Verringerung von 1 % bis hin zu 43 %.

Für eine Verringerung der Hystereseverluste ist gemäß $P_{hyst} = (k_H A H_C B_{max} f)/\rho$ ein Senken der Koerzitivfeldstärke $H_C$ sowie ein Erhöhen der Materialdichte $\rho$ vorteilhaft.

In den vorliegenden Versuchen wurde festgestellt, dass durch ein erfindungsgemäßes Elektroblech 2 mit Lagen verbunden durch Adhäsionsbindung 12 mit atomarer Diffusion 14 und durch Vorsehen der erfindungsgemäßen Zusatzlagen 8 einerseits durch eine verringerte Koerzitivfeldstärke $H_C$, hier gezeigt bei E2, Austenit1 und Austenit2, die Hystereseverluste verringert werden können. Zudem kann, auch bei einer im Vergleich zum Referenzwert erhöhten Koerzitivfeldstärke $H_C$, hier gezeigt bei E1, der Hystereseverlust maßgeblich verringert werden, wobei diese Verringerung nicht allein auf die Vergrößerung des arithmetischen Mittels der Materialdichte ρ zurückzuführen ist.

Durch ein erfindungsgemäßes Elektroblech 2 mit Funktionslagen 4 und Zusatzlagen 8 verbunden durch Adhäsionsbindung 12 mit atomarer Diffusion 14 und durch Vorsehen der erfindungsgemäßen Zusatzlagen 8 zur Trennung der einzelnen Funktionslagen 4 mit einer erfindungsgemäß geringen Dicke der Funktionslagen 4 kann also zudem ein Effekt erzielt werden, durch welchen die Hystereseverluste durch strukturelle Prozesse im Inneren des Verbundmaterials reduziert werden. Beispielsweise wird die für die veränderte Ausrichtung innerer Elementarstrukturen, der magnetischen Domänen, benötigte Energie reduziert. Dieser Effekt kann als eine Vergrößerung der bei den elektromagnetisch relevanten Ummagnetisierungseffekten effektiv wirkenden vergrößerten Materialdichte angesehen werden.

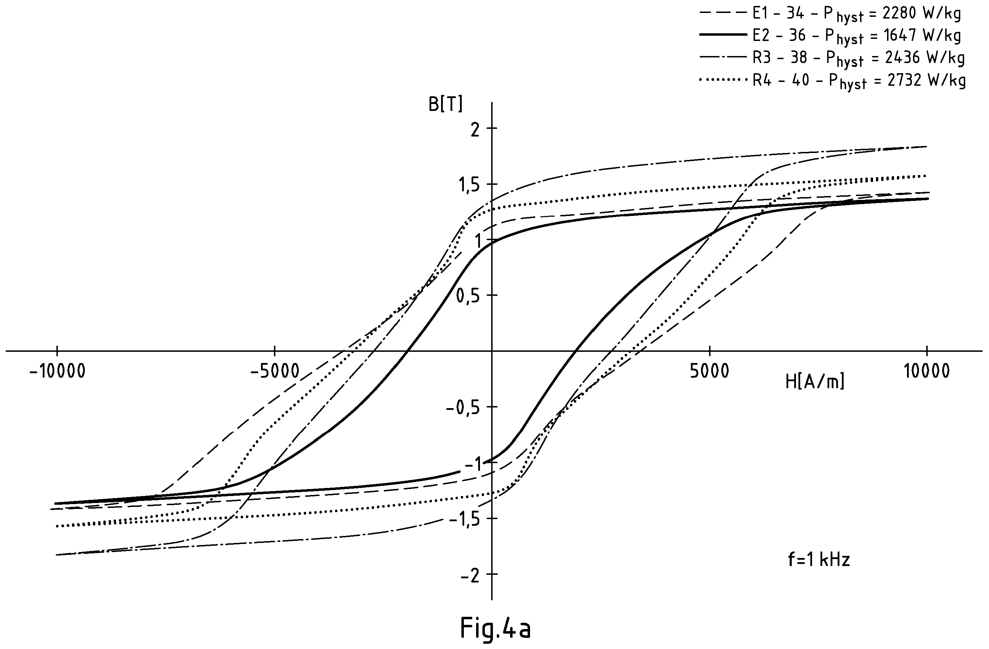

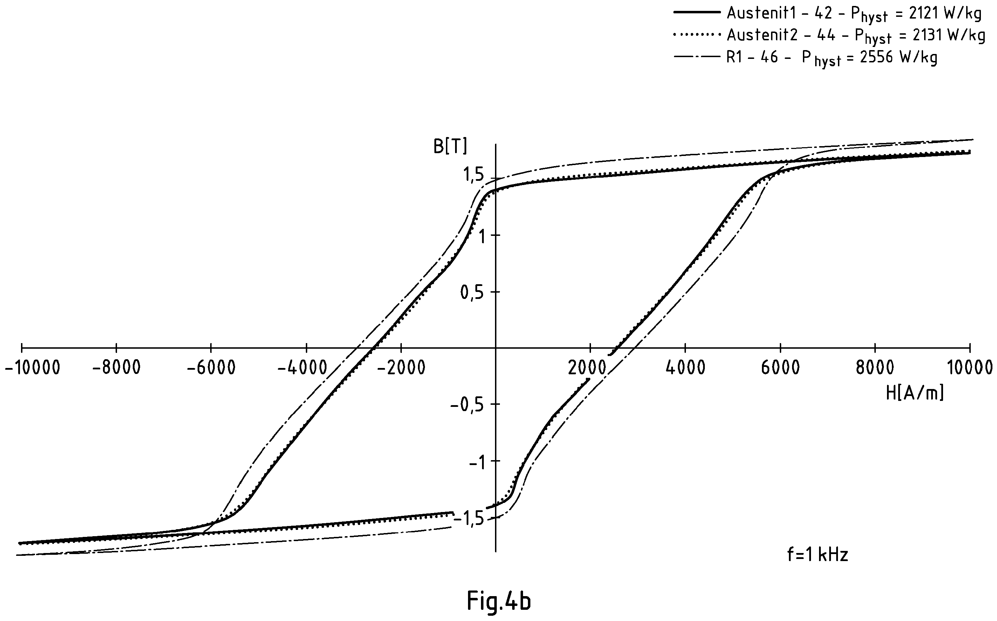

In den Fig. 4a und 4b sind Hysteresemessungen an verschiedenen Elektroblechen gezeigt, wobei in Fig. 4a die mit oben erläuterten Ausführungsformen E1 und E2 eines erfindungsgemäßen Elektroblechs 2 gemessenen Hystereseschleife 34 und 36 den Hystereseschleifen 38 und 40 gemessen für die einschichtigen Referenzbleche R3 und R4 hergestellt aus Stahl DD11 gegenübergestellt sind. Das Referenzblech R3 ist bei ca. 600 °C wärmebehandelt worden und das Referenzblech R4 ist walzhart und nicht wärmebehandelt worden. Beide Referenzbleche haben auch eine Blechdicke von 0,5 mm.

In Fig. 4b sind die mit oben erläuterten Ausführungsformen Austenit1 und Austenit2 eines erfindungsgemäßen Elektroblechs 2 gemessenen Hystereseschleifen 42 und 44 der Hystereseschleife 46 gemessen für das ober erläuterte Referenzblech R1 gegenübergestellt.

Alle in den Fig. 4a und 4b gezeigten Hystereseschleifen 34, 36, 38, 40, 42, 44 und 46 wurden bei einer Frequenz von 1 kHz gemessen.

Der Hystereseverlust ist proportional zur Fläche der jeweils durchlaufenen Hystereseschleife, so dass aus den Figuren ersichtlich ist, dass im Vergleich zu den referenzierten Referenzblechen R1, R3 und R4 in den jeweiligen Graphen für die Ausführungsformen eines erfindungsgemäßen Elektroblechs E1, E2, Austenit1 und Austenit2 jeweils ein geringerer Hystereseverlust im Vergleich zu den referenzierten Elektroblechen gemessen wurde.

Insbesondere kann der Hystereseverlust gemessen für E2 mit einem Wert von $P_{hyst}$ = 1647 W/kg gegenüber sämtlichen weiteren gemessenen Werten deutlich reduziert werden. Auch die gemessenen Hystereseverluste für E1 $P_{hyst}$ = 2280 W/kg, für Austenit1 $P_{hyst}$ = 2121 W/kg und für Austenit2 $P_{hyst}$ = 2131 W/kg liegen unter den gemessenen Werten für die Referenzmaterialien R1 $P_{hyst}$ = 2556 W/kg, R3 $P_{hyst}$ = 2436 W/kg und R4 $P_{hyst}$ = 2732 W/kg.

Sämtliche gezeigten Messungen verdeutlichen, dass mit Elektroblechen 2 gemäß den oben beschriebenen erfindungsgemäßen Ausführungsformen eine Verringerung sowohl der Hysterese- als auch der Wirbelstromverluste erreicht wird. Insgesamt werden die Ummagnetisierungsverluste bei Verwendung erfindungsgemäßer Elektrobleche 2 in elektromagnetischen Bauteilen durch gezielte Materialauswahl der Werkstoffe der Funktionslagen 4 und Zusatzlagen 8 einerseits sowie andererseits durch gezieltes Werkstoffdesign, insbesondere durch eine Verringerung der Dicken der Funktionslagen 4, deutlich reduziert. Dies ermöglicht eine optimierte Energieumwandlung elektromagnetischer Bauteile und erlaubt eine flexiblere Gestaltung derselben, insbesondere durch variabel kombinierbare Lagenstärken und variable Werkstoffauswahl.

Die in den Fig. 4a und 4b gezeigten Hysteresekurven sind in ihren absoluten Werten beispielhaft zu verstehen. Wenn ein in seinen ferromagnetischen Eigenschaften davon abweichender Stahl für die Referenzmaterialien und die Funktionslagen der erfindungsgemäßen Elektrobleche verwendet wird, können sich andere absolute Magnetisierungswerte ergeben, der relative Verlauf der Hysteresekurven und die erläuterten Verbesserungen treten mit anderen Stählen aber in gleicher Weise auf.

**Patentansprüche**

1. Elektroband,

   - mit mindestens einer Funktionslage (4) zumindest teilweise bestehend aus einem ferromagnetischen Werkstoff und
   - mit mindestens einer Zusatzlage (8) zumindest teilweise bestehend aus einem nicht magnetisierbaren Werkstoff,
   - wobei die mindestens eine Zusatzlage (8) und die mindestens eine Funktionslage (4) miteinander verbunden sind, und
   - wobei mindestens eine Funktionslage (4) eine Dicke im Bereich von 2 bis 100 μm, bevorzugt von 2 bis 60 μm, aufweist,

   **dadurch gekennzeichnet,**

   - **dass** die mindestens eine Zusatzlage (8) und die mindestens eine Funktionslage (4) durch eine Adhäsionsbindung (12) mit atomarer Diffusion (14) miteinander verbunden sind.

2. Elektroband nach einem Anspruch 1, **dadurch gekennzeichnet,** **dass** die mindestens eine Zusatzlage (8) eine Dicke im Bereich von 2 bis 100 μm, bevorzugt von 2 bis 60 μm, aufweist.

3. Elektroband nach Anspruch 1 oder 2, **dadurch gekennzeichnet,**

**dass** die mindestens eine Zusatzlage (8) zumindest teilweise, vorzugsweise vollständig, aus einem metallischen Werkstoff besteht.

4. Elektroband nach einem der Ansprüche 1 bis 3, **dadurch gekennzeichnet,** **dass** die mindestens eine Zusatzlage (8) Kupfer (Cu), bevorzugt einen Kupfergehalt mit einem Massenanteil im Bereich von 1 bis 15 %, aufweist.

5. Elektroband nach einem der Ansprüche 1 bis 4, **dadurch gekennzeichnet,** **dass** die mindestens eine Zusatzlage (8) Aluminium (Al), bevorzugt einen Aluminiumgehalt mit einem Massenanteil im Bereich von 1 bis 15 %, insbesondere im Bereich von 3 bis 15%, aufweist.

6. Elektroband nach einem der Ansprüche 1 bis 5, **dadurch gekennzeichnet,** **dass** die mindestens eine Zusatzlage (8) eine spezifische Wärmeleitfähigkeit zumindest gleichgroß wie, bevorzugt größer als, die spezifische Wärmeleitfähigkeit der mindestens einen Funktionslage (4) aufweist.

7. Elektroband nach einem der Ansprüche 1 bis 6, **dadurch gekennzeichnet,** **dass** die mindestens eine Zusatzlage (8) zumindest teilweise, vorzugsweise vollständig, aus einer austenitischen Legierung oder einem austenitischen Stahl besteht.

8. Elektroband nach einem der Ansprüche 1 bis 7, **dadurch gekennzeichnet,** **dass** die mindestens eine Zusatzlage (8) zumindest teilweise, vorzugsweise vollständig, aus einem nicht-metallischen Werkstoff, bevorzugt einem Kohlenstoff (C)-enthaltenden Werkstoff, besonders bevorzugt Graphen oder Graphit, besteht.

9. Elektroband nach einem der Ansprüche 1 bis 8, **dadurch gekennzeichnet,**

    - **dass** mindestens zwei Funktionslagen (4) unterschiedliche ferromagnetische Werkstoffe aufweisen und/oder
    - **dass**, bei Verwendung mehrerer Zusatzlagen (8), mindestens zwei Zusatzlagen (8) unterschiedliche nicht magnetisierbare Werkstoffe aufweisen.

10. Elektroband nach einem der Ansprüche 1 bis 9, **dadurch gekennzeichnet,** **dass** die Materialeigenschaften in der mindestens einen Funktionslage und/oder in der mindestens einen Zusatzlage variieren.

11. Anordnung aus Elektrobändern, insbesondere Elektroblechen, nach einem der Ansprüche 1 bis 10, **dadurch gekennzeichnet,**

    - **dass** mindestens zwei Elektrobänder in einem Stapel angeordnet sind und
    - **dass** zwischen mindestens zwei Elektrobändern eine Trennschicht vorgesehen ist.

12. Verwendung eines Elektrobands nach einem der Ansprüche 1 bis 10 als Eisenkern.

13. Verfahren zur Herstellung eines Elektrobands, insbesondere eines Elektrobands nach einem der Ansprüche 1 bis 10,

    - bei dem mindestens eine Funktionslage (4) bereitgestellt wird,
    - wobei die mindestens eine Funktionslage (4) zumindest teilweise, vorzugsweise vollständig, aus einem ferromagnetischen Werkstoff besteht,
    - bei dem mindestens eine Zusatzlage (8) bereitgestellt wird,
    - wobei die mindestens eine Zusatzlage (8) zumindest teilweise, vorzugsweise vollständig, aus einem nicht magnetisierbaren Werkstoff besteht,
    - bei dem die mindestens eine Funktionslage (4) und die mindestens eine Zusatzlage (8) angrenzend zueinander angeordnet werden,
    - bei dem zwischen der mindestens einen Funktionslage (4) und der mindestens einen Zusatzlage (8) durch Anwendung von Druck eine Adhäsionsbindung (12) mit atomarer Diffusion (14) erzeugt wird, und
    - bei dem mindestens eine Funktionslage (4) auf eine Dicke im Bereich von 2 bis 100 µm, bevorzugt von 2 bis 60 µm, gebracht wird.

14. Verfahren nach Anspruch 13, bei dem zumindest eine der mindestens einen eine Funktionslage (4) und/oder zumindest eine der mindestens einen Zusatzlage (8) wärmebehandelt werden.

15. Verfahren nach Anspruch 13 oder 14, bei dem die mindestens eine Funktionslage (4) und die mindestens eine Zusatzlage (8) mittels Kaltwalzplattieren oder mittels Warmplattieren miteinander gefügt werden.

**Claims**

1. Electrical strip,

    - with at least one functional layer (4) at least partially consisting of a ferromagnetic material and

- with at least one additional layer (8) at least partially consisting of a non-magnetisable material,
- wherein the at least one additional layer (8) and the at least one functional layer (4) are connected to each other,
- wherein at least one functional layer (4) has a thickness in the range from 2 to 100 $\mu$m, preferably from 2 to 60 $\mu$m,

**characterised in**

- **that** the at least one functional layer (4) and the at least one additional layer (8) are bonded to each other by an adhesive bond (12) with atomic diffusion (14).

2. Electrical strip according to claim 1,
   **characterised in**
   **that** the at least one additional layer (8) has a thickness in the range from 2 to 100 $\mu$m, preferably from 2 to 60 $\mu$m.

3. Electrical strip according to claim 1 or 2,
   **characterised in**
   **that** the at least one additional layer (8) consists at least partially, preferably completely, of a metallic material.

4. Electrical strip according to any one of claims 1 to 3,
   **characterised in**
   **that** the at least one additional layer (8) has copper (Cu), preferably a copper content with a mass fraction in the range from 1 to 15%.

5. Electrical strip according to any one of claims 1 to 4,
   **characterised in**
   **that** the at least one additional layer (8) has aluminium (Al), preferably an aluminium content with a mass fraction in the range from 1 to 15%, in particular in the range from 3 to 15%.

6. Electrical strip according to any one of claims 1 to 5,
   **characterised in**
   **that** the at least one additional layer (8) has a specific thermal conductivity at least equal to, preferably greater than, the specific thermal conductivity of the at least one functional layer (4).

7. Electrical strip according to any one of claims 1 to 6,
   **characterised in**
   **that** the at least one additional layer (8) consists at least partially, preferably completely, of an austenitic alloy or an austenitic steel.

8. Electrical strip according to any one of claims 1 to 7,
   **characterised in**

**that** the at least one additional layer (8) consists at least partially, preferably completely, of a non-metallic material, preferably a carbon (C)-containing material, particularly preferably graphene or graphite.

9. Electrical strip according to any one of claims 1 to 8,
   **characterised in**

   - **that** at least two functional layers (4) have different ferromagnetic materials and/or
   - **that**, when several additional layers (8) are used, at least two additional layers (8) have different non-magnetisable materials.

10. Electrical strip according to any one of claims 1 to 9,
    **characterised in**
    **that** the material properties vary in the at least one functional layer and/or in the at least one additional layer.

11. Arrangement of electrical strips, in particular electrical sheets, according to one of claims 1 to 10,
    **characterised in**

    - **that** at least two electrical strips are arranged in a stack and
    - **that** a separating layer is provided between at least two electrical strips.

12. Use of an electrical strip according to any one of claims 1 to 10 as an iron core.

13. Method of manufacturing an electrical strip, in particular an electrical strip according to any one of claims 1 to 10,

    - in which at least one functional layer (4) is provided,
    - wherein the at least one functional layer (4) consists at least partially, preferentially completely, of a ferromagnetic material,
    - in which at least one additional layer (8) is provided,
    - wherein the at least one additional layer (8) consists at least partially, preferentially completely, of a non-magnetisable material,
    - in which the at least one functional layer (8) and the at least one additional layer (8) are arranged adjacent to one another,
    - in which an adhesive bond (12) with atomic diffusion (14) is created between the at least one functional layer (4) and the at least one additional layer (8) by applying pressure, and
    - in which at least one functional layer (4) has a thickness in the range from 2 to 100 $\mu$m, preferably from 2 to 60 $\mu$m.

**14.** Method according to claim 13,
in which at least one of the at least one functional layer (4) and/or at least one of the at least one additional layer (8) are heat-treated.

**15.** Method according to claim 13 or 14,
in which the at least one functional layer (4) and the at least one additional layer (8) are joined together by means of cold roll cladding or by means of hot cladding.

**Revendications**

**1.** Ruban électrique,

- comprenant au moins une couche fonctionnelle (4) au moins partiellement constituée d'un matériau ferromagnétique, et
- comprenant au moins une couche supplémentaire (8) au moins partiellement constituée d'un matériau non magnétisable,
- la au moins une couche supplémentaire (8) et la au moins une couche fonctionnelle (4) étant reliées l'une à l'autre, et
- au moins une couche fonctionnelle (4) présentant une épaisseur dans la plage comprise entre 2 et 100 $\mu$m, de manière préférée comprise entre 2 et 60 $\mu$m,

**caractérisé en ce que**

- la au moins une couche supplémentaire (8) et la au moins une couche fonctionnelle (4) sont reliées l'une à l'autre grâce à une liaison adhésive (12) avec diffusion atomique (14).

**2.** Ruban électrique selon la revendication 1,
**caractérisé en ce que**
la au moins une couche supplémentaire (8) présente une épaisseur dans la plage comprise entre 2 et 100 $\mu$m, de manière préférée comprise entre 2 et 60 $\mu$m.

**3.** Ruban électrique selon la revendication 1 ou 2,
**caractérisé en ce que**
la au moins une couche supplémentaire (8) est constituée au moins partiellement, de manière préférée complètement, d'un matériau métallique.

**4.** Ruban électrique selon l'une quelconque des revendications 1 à 3,
**caractérisé en ce que**
la au moins une couche supplémentaire (8) présente du cuivre (Cu), de manière préférée une teneur en cuivre avec une fraction massique dans la plage comprise entre 1 et 15 %.

**5.** Ruban électrique selon l'une quelconque des revendications 1 à 4,
**caractérisé en ce que**
la au moins une couche supplémentaire (8) présente de l'aluminium (Al), de manière préférée une teneur en aluminium avec une fraction massique dans la plage comprise entre 1 et 15 %, de manière particulièrement préférée dans la plage comprise entre 3 et 15 %.

**6.** Ruban électrique selon l'une quelconque des revendications 1 à 5,
**caractérisé en ce que**
la au moins une couche supplémentaire (8) présente une conductivité thermique spécifique au moins égale à, de manière préférée supérieure à, la conductivité thermique spécifique de la au moins une couche fonctionnelle (4).

**7.** Ruban électrique selon l'une quelconque des revendications 1 à 6,
**caractérisé en ce que**
la au moins une couche supplémentaire (8) est constituée au moins partiellement, de manière préférée complètement, d'un alliage austénitique ou d'un acier austénitique.

**8.** Ruban électrique selon l'une quelconque des revendications 1 à 7,
**caractérisé en ce que**
la au moins une couche supplémentaire (8) est constituée au moins partiellement, de manière préférée complètement, d'un matériau non métallique, de manière préférée d'un matériau contenant du carbone (C), de manière particulièrement préférée de graphène ou de graphite.

**9.** Ruban électrique selon l'une quelconque des revendications 1 à 8,
**caractérisé en ce que**

- au moins deux couches fonctionnelles (4) présentent des matériaux ferromagnétiques différents et/ou
- en cas d'utilisation de plusieurs couches supplémentaires (8), au moins deux couches supplémentaires (8) présentent des matériaux non magnétisables différents.

**10.** Ruban électrique selon l'une quelconque des revendications 1 à 9,
**caractérisé en ce que**
les propriétés de matériau au sein de la au moins une couche fonctionnelle et/ou au sein de la au moins une couche supplémentaire varient.

**11.** Agencement de rubans électriques, en particulier de tôles électriques, selon l'une quelconque des revendications 1 à 10,

**caractérisé en ce que**

- au moins deux rubans électriques sont agencés au sein d'une pile et
- une couche de séparation est fournie entre au moins deux rubans électriques.

12. Utilisation d'un ruban électrique selon l'une quelconque des revendications 1 à 10 comme noyau de fer.

13. Procédé de fabrication d'un ruban électrique, en particulier d'un ruban électrique selon l'une quelconque des revendications 1 à 10,

- dans lequel au moins une couche fonctionnelle (4) est fournie,
- dans lequel la au moins une couche fonctionnelle (4) est constituée au moins partiellement, de manière préférée complètement, d'un matériau ferromagnétique,
- dans lequel au moins une couche supplémentaire (8) est fournie,
- la au moins une couche supplémentaire (8) étant constituée au moins partiellement, de manière préférée complètement, d'un matériau non magnétisable,
- dans lequel la au moins une couche fonctionnelle (4) et la au moins une couche supplémentaire (8) sont agencées de manière adjacente l'une à l'autre,
- dans lequel une liaison adhésive (12) avec diffusion atomique (14) est créée par application d'une pression entre la au moins une couche fonctionnelle (4) et la au moins une couche supplémentaire (8), et
- dans lequel au moins une couche fonctionnelle (4) est amenée à une épaisseur dans la plage comprise entre 2 et 100 $\mu$m, de manière préférée comprise entre 2 et 60 $\mu$m.

14. Procédé selon la revendication 13,
dans lequel au moins une des au moins une couche fonctionnelle (4) et/ou au moins une des au moins une couche supplémentaire (8) est/sont traitée(s) thermiquement.

15. Procédé selon la revendication 13 ou 14,
dans lequel la au moins une couche fonctionnelle (4) et la au moins une couche supplémentaire (8) sont réunies par placage à froid ou par placage à chaud.

Fig.1a

E2

25 µm

2

8

4

Fig.1b

Fig.1c

EP 4 082 772 B1

Austenit2

Fig.1d

**20a** Vorreinigen, Aktivieren, Plattieren

**22** Haftungsglühung

**24** Walzen

**26** Durchlauf-oder Haubenglühung

**28** Dressieren

**30** Längsteilen

Fig.2a

EP 4 082 772 B1

Fig.2b

EP 4 082 772 B1

| 1 | 2 | 3 | 4 | 5 | 6 | 7 |
|---|---|---|---|---|---|---|
| Werkstoff | Spezifische elektrische Leitfähigkeit $\kappa$ [m $\Omega$ (mm) $^{-2}$ ] | Materialdichte $\rho$ [kg m$^{-3}$] | Zusammensetzung (FL: Funktionslage, ZL: Zwischenlage) | Blechdicke d [mm] | Wirbelstromverlustfaktor $k_{wirbel} = \kappa d^2/(6\rho)$ | Verringerung Wirbelstromverluste [%] |
| R1 | 7,7 | 7,85 | 0,5 mm FL | 0,5 | 40,8705 | Referenz |
| E1 | 12,13 | 7,955 | 16 Lagen (8×10 µm ZL und 8×53 µm FL) | 0,5 | 4,4113 | 89% |
| E2 | 10,33 | 7,335 | 16 Lagen (8×10 µm ZL und 8×53 µm FL) | 0,5 | 5,3113 | 87% |
| Austenit1 | 7,05 | 7,85 | 16 Lagen (8×10 µm ZL und 8×53 µm FL) | 0,5 | 3,6527 | 91% |
| Austenit2 | 7,05 | 7,85 | 16 Lagen (8×10 µm ZL und 8×53 µm FL) | 0,5 | 3,6527 | 91% |

Fig.3a

EP 4 082 772 B1

| 1 | 2 | 3 | 4 | 5 | 6 | 7 | 8 |
|---|---|---|---|---|---|---|---|
| Werkstoff | Materialdichte $\rho$ [kg m$^{-3}$] | Gemessene Koerzitivfeldstärke H$_c$ [A/m] | | Gemessene Hystereseverluste P$_{hyst}$ [W/kg] | | Verringerung Hystereseverluste [%] | |
| | | $f$ = 1 kHz | $f$ = 10 kHz | $f$ = 1 kHz | $f$ = 10 kHz | $f$ = 1 kHz | $f$ = 10 kHz |
| R1 | 7,85 | 2.725 | 6.497 | 2404 | 40614 | Referenz | |
| R2 | 7,85 | 2.744 | 6.403 | 2592 | 40408 | | Referenz |
| E1 | 7,955 | 3.403 | 6.563 | 2074 | 22964 | 14% | 43% |
| E2 | 7,355 | 1.927 | 4.998 | 1580 | 35617 | 34% | 12% |
| Austenit1 | 7,85 | 2.514 | 5.457 | 2071 | 39864 | 14% | 1% |
| Austenit2 | 7,85 | 2.398 | 5.507 | 1961 | 39287 | 18% | 3% |

Fig.3b

EP 4 082 772 B1

**Fig.4a**

Legend:
- E1 – 34 – $P_{hyst}$ = 2280 W/kg
- E2 – 36 – $P_{hyst}$ = 1647 W/kg
- R3 – 38 – $P_{hyst}$ = 2436 W/kg
- R4 – 40 – $P_{hyst}$ = 2732 W/kg

Axes: B[T] (vertical), H[A/m] (horizontal)

f=1 kHz

EP 4 082 772 B1

Fig.4b

31

**IN DER BESCHREIBUNG AUFGEFÜHRTE DOKUMENTE**

**In der Beschreibung aufgeführte Patentdokumente**

- WO 2018157946 A1
- WO 2018019602 A1
- US 3682606 A
- EP 3127647 A1
- DE 102018102422